# EUROPÄISCHE PATENTSCHRIFT

(11) **EP 0 985 443 B1**
(45) Veröffentlichungstag und Bekanntmachung des Hinweises auf die Patenterteilung: **27.10.2010**
(21) Anmeldenummer: 99113690.4
(22) Anmeldetag: 15.07.1999
(51) Int. Cl.: B01D 71/70, C08G 77/00, C08L 83/00, C08F 230/08, C08L 51/08, C08G 77/26, C08G 77/28, C08G 77/48

(54) **Semipermeable Membranen**
Semipermeable membranes
Membranes semi-perméables

(30) Priorität: 10.09.1998 DE 19841440; 09.10.1998 DE 19846608
(43) Veröffentlichungstag der Anmeldung: 15.03.2000
(73) Patentinhaber: Fraunhofer-Gesellschaft zur Förderung der angewandten Forschung e.V., 80686 München (DE)
(72) Erfinder: Wolter, Herbert, Dr., 97950 Gerchsheim (DE); Ballweg, Thomas, Dipl.-Phys., 97877 Wertheim (DE); Storch, Werner, Dipl.-Phys., 97204 Höchberg (DE)

(56) Entgegenhaltungen:
- EP-A- 0 094 060
- DE-A- 4 011 044
- DE-A- 19 627 220
- DE-A1- 2 925 969
- DE-C1- 4 416 857
- DE-C2- 19 627 198
- JP-A- 2 251 231
- JP-A- 59 086 612

## Beschreibung

Die Erfindung betrifft semipermeable Membranen auf der Basis von organisch modifizierten Kieselsäurepolykondensaten, ein Verfahren zu deren Herstellung und deren Verwendung beim Gasaustausch und in Trennverfahren, insbesondere in der Gasseparation, in der Dialyse, in der Pervaporation, sowie in der Mikro-, Ultra- und Hyperfiltration. Die erfindungsgemäßen Membranen stellen Flachmembranen oder rohrförmige Membranen dar.

Zur Trennung von Stoffgemischen sind die verschiedensten Membranmaterialien bekannt, die alle im Hinblick auf ihre technische Einsatzfähigkeit und ihre Wirtschaftlichkeit verbesserungsfähig sind. So sind bekannte Membranmaterialien, wie z.B. Celluloseacetat, wenig temperatur- und druckbeständig und quellen in organischen Lösungsmitteln stark. Die geringe Temperatur-, Druck- und Lösungsmitfelbeständigkeit hat zur Folge, dass sich die Porengröße im technischen Einsatz ständig ändert und dadurch zu nicht reproduzierbaren Ergebnissen sowie zu kurzen Standzeiten der Membranen führen kann.

Ultrafiltrationen z.B. werden überwiegend in wässrigen Systemen durchgeführt, so dass an die mechanische und thermische Stabilität (Sterilisierbarkeit bis 140 °C) der hierfür eingesetzten Membranen, an deren Beständigkeit gegenüber Säuren und Alkalien und deren gezielt einstellbare hydrophile/hydrophobe Eigenschaften besonders hohe Anforderungen gestellt werden. Die bisher zur Membranherstellung eingesetzten Polymere können diese Anforderungen nicht gleichzeitig erfüllen und zeigen z.B. bei relativ guter thermischer Beständigkeit bis etwa 140 °C keine ausreichende mechanische Stabilität.

Für verschiedene Anwendungen oftmals notwendige Oberflächenmodifikationen (Einstellung der Porosität, des Adsorptionsverhaltens etc.) erfordern weitere nachträgliche Prozesse. Ferner haben derart modifizierte Materialien den Nachteil, dass sie nur eine modifizierte Monoschicht an der Oberfläche aufweisen, so dass sie außerordentlich empfindlich gegen mechanische und chemische Einwirkungen sind.

Handelsübliche Polymere wie z.B. Polyethylene, Polypropylene, Polysulfone, Polyimide, Polymethacrylate etc. weisen nur eine geringe Gasdurchlässigkeit (z.B. gegenüber O₂, CO₂ etc.) auf. Eine Permeationssteigerung auf Basis dieser Polymertypen ist nur durch Inkorporation einer Porosität möglich. Z.B. sind mit einer definierten, durchgängigen Porosität versehene Polymer-Hohlfasern direkt nur durch sehr aufwendige Spinnprozesse oder durch nachträgliche und somit zusätzliche Verfahrensschritte zugänglich. Werden derart modifizierte Polymere z.B. zum Gasaustausch in fluiden Systemen verwendet, besteht die Gefahr des Durchtritts der fluiden Phase. Z.B. beim O₂/CO₂-Austausch im Blut in Oxygenatoren während Operationen am offenen Brustkorb bergen die Poren ein erhebliches Gefahrenpotential. Insbesondere bei längeren Operationen wird des Öfteren ein Durchtritt von Blut durch die Poren beobachtet.

Sehr hohe Gas-Permeationswerte ohne Porosität sind nur mit ganz speziellen Polymeren (Silicone, substituierte Polysilylpropine etc.) realisierbar. Die hohe Gasdurchlässigkeit wird allerdings nur durch extreme Einbußen bei den mechanischen Eigenschaften erreicht. Mit steigender Permeabilität nimmt die Festigkeit und der E-Modul ab, d.h. das Material wird zunehmend weicher. Freitragende dünne Folien und stabile Hohlfasern mit geringer Wandstärke sind somit nicht möglich. Folien und Hohlfasern mit einer über weite Bereiche einstellbaren Permeabilität sind nur auf der Basis sehr unterschiedlicher Polymertypen in Verbindung mit verschiedenen Produktionsverfahren möglich.

Membranen auf der Basis von Kieselsäureheteropolykondensaten zeigen eine ausgezeichnete Beständigkeit gegen Säuren und organische Lösungsmittel und sind auch im pH-Bereich bis etwa 10 recht stabil.

Aus der DE 2758415 C2 ist es bekannt, Kieselsäureheteropolykondensate zu porösen Membranen zu verarbeiten, in dem man die in kompakten Blöcken anfallenden Polykondensate mechanisch zu sehr dünnen Scheiben schneidet, die dann direkt oder nach vorherigem Schleifen als Membranen eingesetzt werden. Da die Kieselsäureheteropolykondensate jedoch in der Regel nicht elastisch genug sind, brechen die Membranscheiben beim Schneiden, und auch die notwendige Membranfläche wird nach dieser Methode meist nicht erreicht.

In der DE 2925969 C2 ist ein anderes Verfahren zur Herstellung von porösen Membranen auf der Basis von Kieselsäureheteropolykondensaten an der Grenzfläche einer organischen und einer wässrigen Phase beschrieben. Da die entstehenden Membranen jedoch aufgrund des Kontakts mit einer wässrigen Phase sehr wasserhaltig sind, besteht beim Trocknen die Gefahr einer übermäßigen Schrumpfung und einer damit verbundenen Rissbildung. Die hydrolytische Polykondensation der Ausgangskomponenten zu Kieselsäureheteropolykondensaten verläuft unter Substanzaustritt, so dass es unvermeidlich zu einer Schrumpfung der Polykondensate kommt.

Bei den in der DE 2758415 C2 und in der DE 2925969 C2 beschriebenen Membranen erfolgt die Formgebung zur Membran und die Härtung der Membran durch eine anorganische Kondensation, d.h. durch den Aufbau eines Si-O-Si-Netzwerkes. Diese Membranen zeigen sehr schlechte mechanische Eigenschaften, die mechanischen Stabilitäten genügen nur selten den an sie gestellten Anforderungen. Außerdem sind diese Membranen spröde und nicht flexibel.

Aus der EP 0094060 B1 ist ein weiteres Verfahren zur Herstellung von Membranen auf der Basis von Kieselsäureheteropolykondensaten bekannt. Dabei wird die Polykondensation an der Oberfläche eines Trägers durchgeführt, der die Membran stützt. Die Formgebung zur Membran und die Härtung der Membran erfolgt auch hier durch anorganische Kondensation, d.h. durch den Aufbau eines anorganischen Netzwerkes. Die resultierenden Membranen sind Träger unterstützt und nicht selbst tragend.

In der JP 02 251 231 ist ein Membran-Material beschrieben, das dadurch erhalten wird, dass man ein organisches Polymer, das OH-Gruppen aufweist, - z.B. Polyvinylalkohol, - mit monomeren, organisch modifizierten Silanen über Siloxan-Bindungen vernetzt. Dieses Membran-Material stellt ein über Siloxan-Bindungen vernetztes organisches Polymer dar.

Aufgabe der vorliegenden Erfindung ist es, semipermeable Membranen für den Gasaustausch und für Stofftrennungen bereitzustellen, deren Austauschvermögen über weite Bereiche variiert und den Erfordernissen des jeweiligen Anwendungsfalles angepasst ist. Ferner sollen die Membranen nicht nur Träger unterstützt, sondem auch freitragend sein, und sie sollen als rohrförmige Membranen oder als Flachmembranen vorliegen. Die Permeabilität und Flexibilität der Membranen soll über weite Bereiche variiert und den Anforderungen des jeweiligen Anwendungsfalles angepasst sein. Ferner sollen die Membranen bei hoher mechanischer Stabilität hohe Permeabilitäten zeigen, insbesondere auch gegenüber Gasen, damit diese Membranen auch für den Gasaustausch und für Stofftrennungen eingesetzt werden können, ohne dass die Gefahr des Durchtritts der fluiden Phase besteht. Auch bei hohen Permeationswerten sollen die Membranen noch freitragend sein. Die Membranen sollen toxikologisch unbedenklich und damit im medizinischen Bereich anwendbar sein.

Ferner ist es Aufgabe der vorliegenden Erfindung, ein Verfahren bereit zustellen, mit dem semipermeable Membranen gefertigt werden können, deren Eigenschaftsprofil in weiten Bereichen variierbar ist. Durch einfache Variation der Verfahrensschritte sollen die chemischen und physikalischen Eigenschaften der Membran in weiten Bereichen den Anforderungen des jeweiligen Anwendungsfalles angepasst werden können. Das Verfahren soll einfach, schnell und kostengünstig durchführbar sein. Mit dem Verfahren sollen Membranen gefertigt werden können, die den oben genannten Anforderungen entsprechen. Ferner soll das Verfahren auch für die Endlosproduktion von Hohlfasern und Flachmembranen geeignet sein. Außerdem sollen die für verschiedene Anwendungen oftmals erforderlichen Oberflächenmodifikationen, z.B. zur Vermeidung von Blutkoagulationen, zur Einstellung der Polarität, des Adsorptionsverhaltens etc., sowohl während der Materialsynthese, d.h. in situ, als auch nachträglich realisiert werden können.

Gelöst wird diese Aufgabe durch ein Verfahren gemäß Anspruch 1. Die Membranen sind dadurch erhältlich, dass man eine gering viskose bis harzartige Flüssigkeit nach üblichen Methoden zu Membranen verarbeitet und diese gegebenenfalls trocknet. Die Härtung der resultierenden Membranen kann z.B. thermisch und/oder strahlungsinduziert und/oder chemisch induziert erfolgen.

Die Flüssigkeit bzw. das Harz, aus der bzw. aus dem die Membranen gefertigt werden, wird erhalten
a) durch hydrolytische Polykondensation von
   ■ einer oder mehreren Verbindungen der allgemeinen Formel I, und/oder
   ■ einer oder mehreren Verbindungen der allgemeinen Formel II, und/oder
   ■ einer oder mehreren Verbindungen der allgemeinen Formel III, und/oder
   ■ einer oder mehreren Verbindungen der allgemeinen Formel IV, und/oder
   ■ von den Verbindungen der Formeln I bis IV abgeleiteten Vorkondensaten und gegebenenfalls
   ■ einer oder mehreren Verbindungen der allgemeinen Formel V, und/oder von diesen abgeleiteten Vorkondensaten,
   und gegebenenfalls
b) durch Zugabe von
   ■ einem oder mehreren copolymerisierbaren und/oder (poly)addierbaren Monomeren und/oder Oligomeren,
   ■ und/oder von einem oder mehreren Härtungskatalysatoren,
   ■ und/oder von einem oder mehreren, löslichen und/oder flüchtigen, Poren erzeugenden Additiven.

Die hydrolytische Polykondensation wird durch Zugabe von Wasser oder von Feuchtigkeit und gegebenenfalls in Anwesenheit eines Lösungsmittels und/oder eines Kondensationskatalysators durchgeführt. Bezogen auf die Monomere liegt das molare Verhältnis der Summe der Verbindungen der Formeln I, II, III und IV zu Verbindungen der Formel V zwischen 1:0 und 1: 20.

Die zur Herstellung der erfindungsgemäßen Membranen eingesetzte Flüssigkeit bzw. das eingesetzte Harz stellen also ein Polykondensat aus hydrolytisch kondensierten Silicium-Verbindungen der Formeln I und/oder II und/oder III und/oder IV und gegebenenfalls V dar, wobei das Polykondensat gegebenenfalls noch Wasser und/oder Lösungsmittel und/oder die oben genannten Zusatzstoffe erhält. In Abhängigkeit von der Viskosität des Polykondensates kann man von einer mehr oder weniger viskosen Flüssigkeit oder von einem Harz reden.

In der allgemeinen Formel I haben die Reste und Indices folgende Bedeutung, wobei bei Indices ≥ 2 die diesbezüglichen Reste gleich oder verschieden sind. 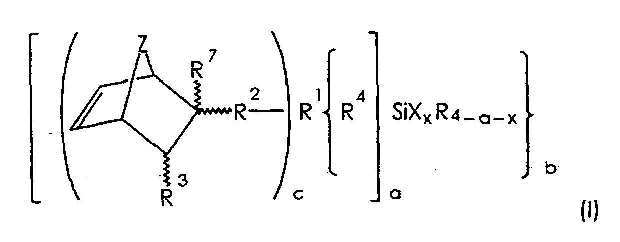
- R =: Alkyl, Alkenyl, Aryl, Alkylaryl oder Arylalkyl mit jeweils 1 bis 15 Kohlenstoff- Atomen, wobei diese Reste Sauerstoff- und/oder Schwefel-Atome und/ oder Ester- und/oder Carbonyl- und/oder Carboxyl- und/oder Amid- und/ oder Amino-Gruppen enthalten können.
- R¹ =: Alkylen, Arylen, Arylenalkylen oder Arylenalkylen mit jeweils 0 bis 15 Koh- lenstoff-Atomen, wobei diese Reste Sauerstoff- und/oder Schwefel-Atome und/oder Ester- und/oder Carbonyl- und/oder Carboxyl- und/oder Amid- und/oder Amino-Gruppen enthalten können.
- R² =: Alkylen, Arylen, Arylenalkylen oder Arylenalkylen mit jeweils 0 bis 15 Koh- lenstoff-Atomen, wobei diese Reste Sauerstoff- und/oder Schwefel-Atome und/oder Ester- und/oder Carbonyl- und/oder Carboxyl- und/oder Amid- und/oder Amino-Gruppen enthalten können.
- R³ =: Wasserstoff, R²-R¹-R⁴-SiX_{X}R_{3-X'}, Carboxyl-, Alkyl, Alkenyl, Aryl, Alkylaryl oder Arylalkyl mit jeweils 1 bis 15 Kohlenstoff-Atomen, wobei diese Reste Sauer- stoff- und/oder Schwefel-Atome und/oder Ester- und/oder Carbonyl- und /oder Carboxyl- und/oder Amid- und/oder Amino-Gruppen enthalten können.
- R⁴ =: -(CHR⁶-CHR⁶)ₙ-, mit n = 0 oder 1, -CHR⁶-CHR⁶-S-R⁵-, -CO-S-R⁵-, -CHR⁶-CHR⁶-NR⁶-R⁵-, -Y-CS-NH-R⁵-, -S-R⁵,-Y-CO-NH-R⁵-, -CO-O-R⁵-, -Y-CO-C₂H₃(COOH)-R⁵-, -Y-CO-C₂H₃(OH)-R⁵- oder -CO-NR⁶-R⁵-.
- R⁵ =: Alkylen, Arylen, Arylenalkylen oder Arylenalkylen mit jeweils 1 bis 15 Koh- lenstoff-Atomen, wobei diese Reste Sauerstoff- und/oder Schwefel-Atome und/oder Ester- und/oder Carbonyl- und/oder Carboxyl- und/oder Amid- und/oder Amino-Gruppen enthalten können.
- R⁶ =: Wasserstoff, Alkyl oder Aryl mit 1 bis 10 Kohlenstoff-Atomen.
- R⁷ =: Wasserstoff, Alkyl, Alkenyl, Aryl, Alkylaryl oder Arylalkyl mit jeweils 1 bis 15 Kohlenstoff-Atomen, wobei diese Reste Sauerstoff- und/oder Schwefel- Atome und/oder Ester- und/oder Carbonyl- und/oder Carboxyl- und/ oder Amid- und/oder Amino-Gruppen enthalten können.
- X =: Wasserstoff, Halogen, Hydroxy, Alkoxy, Acyloxy, Alkylcarbonyl, Alkoxycarb- onyl oder NR"₂, mit R" = Wasserstoff, Alkyl, Alkylaryl oder Aryl.
- Y =: -O-, -S- oder -NR⁶-.
- Z =: -O- oder -(CHR⁶)ₘ-, mit m = 1 oder 2.
- a =: 1, 2 oder 3, mit b = 1 für a = 2 oder 3.
- b =: 1, 2 oder 3, mit a = 1 für b = 2 oder 3.
- c =: 1 bis 6.
- x =: 1,2 oder 3, mit a+x = 2, 3 oder 4.
Organisch modifizierte Silane der allgemeinen Formel I, deren Herstellung sowie konkrete Beispiele sind in der DE 19627198 C2 ausführlichst beschrieben. Auf die Offenbarung der DE 19627198 C2 wird hier ausdrücklich Bezug genommen. In bevorzugten Ausführungsformen der erfindungsgemäßen Membranen werden organisch modifizierte Silane der allgemeinen Formel I und/oder davon abgeleitete Vorkondensate eingesetzt, in denen die Indices a und/oder b und/oder c den Wert 1 annehmen.

In der allgemeinen Formel II haben die Reste und Indices folgende Bedeutung, wobei bei Indices ≥ 2 die diesbezüglichen Reste gleich oder verschieden sind. 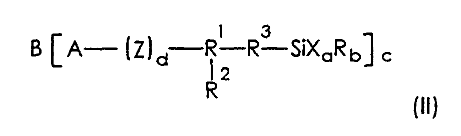
- B =: ein geradkettiger oder verzweigter organischer Rest mit mindestens einer C=C-Doppelbindung und 4 bis 50 Kohlenstoff-Atomen.
- R =: Alkyl, Alkenyl, Aryl, Alkylaryl oder Arylalkyl mit jeweils 1 bis 15 Kohlenstoff- Atomen, wobei diese Reste Sauerstoff- und/oder Schwefel-Atome und/ oder Ester- und/oder Carbonyl- und/oder Carboxyl- und/oder Amid- und/ oder Amino-Gruppen enthalten können.
- R³ =: Alkylen, Arylen, Arylenalkylen oder Alkylenarylen mit jeweils 0 bis 10 Koh- lenstoff-Atomen, wobei diese Reste durch Sauerstoff- und/oder durch Schwefel-Atome und/oder durch Amino-Gruppen unterbrochen sein kön- nen.
- X =: Wasserstoff, Halogen, Hydroxy, Alkoxy, Acyloxy, Alkylcarbonyl, Alkoxycarb- onyl oder NR"₂, mit R"= Wasserstoff, Alkyl, Aryl oder Alkylaryl.
- A =: O, S oder NH für d = l und Z = CO und
R¹ = Alkylen, Arylen oder Alkylenarylen mit jeweils 1 bis 10 Kohlenstoff- Atomen, wobei diese Reste durch Sauerstoff- und/oder durch Schwefel-Atome und/oder durch Amino-Gruppen unterbrochen sein können, und
R² = COOH oder H. oder
- A =: O, S, NH oder COO für d = 1 und Z = CHR', mit R' = H, Alkyl, Aryl oder Alkylaryl, und
R¹ = Alkylen, Arylen oder Alkylenarylen mit jeweils 1 bis 10 Kohlenstoff- Atomen, wobei diese Reste durch Sauerstoff- und/oder durch Schwefel-Atome und/oder durch Amino-Gruppen unterbrochen sein können, und
R² = OH. oder
- A =: O, S, NH oder COO für d = 0 und
R¹ = Alkylen, Arylen oder Alkylenarylen mit jeweils 1 bis 10 Kohlenstoff- Atomen, wobei diese Reste durch Sauerstoff- und/oder durch Schwefel-Atome und/oder durch Amino-Gruppen unterbrochen sein können, und
R² = OH. oder
- A =: S für d = 1 und Z = CO und
R¹ = N und
R² = H.
- a =: 1, 2 oder 3.
- b =: 0, 1 oder 2, mit a+b = 3.
- c =: 1, 2, 3 oder 4.

Organisch modifizierte Silane der allgemeinen Formel II, deren Herstellung sowie konkrete Beispiele sind in der DE 4416857 C1 ausführlichst beschrieben. Auf die Offenbarung der DE 4416857 C1 wird hier ausdrücklich Bezug genommen. In bevorzugten Ausführungsformen der erfindungsgemäßen Membranen werden organisch modifizierte Silane der allgemeinen Formel II und/oder davon abgeleitete Vorkondensate eingesetzt, in denen die Alkyl- und/oder Alkylen- und/oder Alkoxy-Gruppen 1 bis 4 Kohlenstoff-Atome aufweisen. In weiteren bevorzugten Ausführungsformen weist der Rest B der allgemeinen Formel II eine oder mehrere Acrylat- und/oder Methacrylat-Gruppen auf.

In der allgemeinen Formel III haben die Reste und Indices folgende Bedeutung, wobei bei Indices ≥ 2 die diesbezüglichen Reste gleich oder verschieden sind.

{XₐR_{b}Si[(R'A)_{c}]_{(4-a-b)}}ₓ<B (III)

- A =: O, S, PR", POR", NHC(O)O oder NHC(O)NR".
- B =: geradkettiger oder verzweigter organischer Rest, der sich von einer Ver- bindung B' mit mindestens einer (für c = 1 und A = NHC(O)O oder NHC(O)NR") bzw. mindestens zwei C=C-Doppelbindungen und 5 bis 50 Kohlenstoff-Atomen ableitet.
- R =: Alkyl, Alkenyl, Aryl, Alkylaryl oder Arylalkyl mit jeweils 1 bis 15 Kohlenstoff- Atomen, wobei diese Reste Sauerstoff- und/oder Schwefel-Atome und/ oder Ester- und/oder Carbonyl- und/oder Carboxyl- und/oder Amid- und/ oder Amino-Gruppen enthalten können.
- R' =: Alkylen, Arylen oder Alkylenarylen.
- R" =: Wasserstoff, Alkyl, Aryl oder Alkylaryl.
- X =: Wasserstoff, Halogen, Hydroxy, Alkoxy, Acyloxy, Alkylcarbonyl, Alkoxycarb- onyl oder NR"₂.
- a =: 1, 2 oder 3.
- b =: 0, 1 oder 2.
- c =: 0 oder 1.
- x =: eine ganze Zahl, deren Maximalwert der Anzahl von Doppelbindungen in der Verbindung B' minus 1 entspricht, bzw. gleich der Anzahl von Doppel- bindungen in der Verbindung B' ist, wenn c = 1 und A für NHC(O)O oder NHC(O)NR" steht.

Die obigen Alkyl- bzw. Alkenyl-Reste sind gegebenenfalls substituierte geradkettige, verzweigte oder cyclische Reste mit 1 bzw. 2 bis 20 Kohlenstoff-Atomen. Aryl steht für gegebenenfalls substituiertes Phenyl, Naphthyl oder Biphenyl, und die obigen Alkoxy-, Acyloxy-, Alkylcarbonyl-, Alkoxycarbonyl-, Alkylaryl-, Arylalkyl-, Arylen-, Alkylen- und Alkylenaryl-Reste leiten sich von den oben definierten Alkyl- und Aryl-Resten ab.

Organisch modifizierte Silane der allgemeinen Formel III, deren Herstellung sowie konkrete Beispiele sind in der DE 4011044 C2 ausführlichst beschrieben. Auf die Offenbarung der DE 4011044 C2 wird hier ausdrücklich Bezug genommen. In bevorzugten Ausführungsformen der erfindungsgemäßen Membranen werden Silane der allgemeinen Formel III und/oder davon abgeleitete Vorkondensate eingesetzt, in denen der Rest B eine oder mehrere Acrylat- und/oder Methacrylat-Gruppen aufweist.

In der allgemeinen Formel IV haben die Reste und Indices folgende Bedeutung, wobei bei Indices ≥ 2 die diesbezüglichen Reste gleich oder verschieden sind.

YₐSiXₓR₄₋ₐ₋ₓ (IV)

- R =: Alkyl, Alkenyl, Aryl, Alkylaryl oder Arylalkyl mit jeweils 1 bis 15 Kohlenstoff- Atomen, wobei diese Reste Sauerstoff- und/oder Schwefel-Atome und/ oder Ester- und/oder Carbonyl- und/oder Carboxyl- und/oder Amid- und/ oder Amino-Gruppen enthalten können.
- X =: Wasserstoff, Halogen, Hydroxy, Alkoxy, Acyloxy, Alkylcarbonyl, Alkoxycarb- onyl oder NR"₂, mit R" = Wasserstoff, Alkyl, Aryl oder Alkylaryl.
- Y =: organischer Rest mit 1 bis 30, bevorzugt mit 1 bis 20 Kohlenstoff-Atomen und mit 1 bis 5, bevorzugt mit 1 bis 4 Mercapto-Gruppen.
- a =: 1, 2 oder 3.
- x =: 1, 2 oder 3, mit a+x = 2, 3 oder 4.

Die Alkyl-Reste sind z.B. geradkettige, verzweigte oder cyclische Reste mit 1 bis 20, insbesondere mit 1 bis 10 Kohlenstoff-Atomen und vorzugsweise niedere Alkyl-Reste mit 1 bis 6, besonders bevorzugt mit 1 bis 4 Kohlenstoff-Atomen. Spezielle Beispiele sind Methyl, Ethyl, n-Propyl, i-Propyl, n- Butyl, i-Butyl, s-Butyl, t-Butyl, n-Pentyl, n-Hexyl, Cyclohexyl, 2-Ethylhexyl, Dodecyl und Octadecyl. Die Alkenyl-Reste sind z.B. geradkettige, verzweigte oder cyclische Reste mit 2 bis 20, bevorzugt mit 2 bis 10 Kohlenstoff-Atomen und vorzugsweise niedere Alkenyl-Reste mit 2 bis 6 Kohlenstoff-Atomen, wie z.B. Vinyl, Allyl und 2-Butenyl. Bevorzugte Aryl-Reste sind Phenyl, Biphenyl und Naphthyl.

Die Alkoxy-, Acyloxy-, Alkylamino-, Dialkylamino-, Alkylcarbonyl-, Alkoxycarbonyl-, Arylaklyl-, Alkylaryl-, Alkylen- und Alkylenarylen-Reste leiten sich vorzugsweise von den oben genannten Alkyl- und Aryl-Resten ab. Spezielle Beispiele sind Methoxy, Ethoxy, n- und i-Propoxy, n-, i-, s- und t- Butoxy, Monomethylamino, Monoethylamino, Dimethylamino, Diethylamino, N-Ethylanilino, Acetyloxy, Propionyloxy, Methylcarbonyl, Ethylcarbonyl, Methoxycarbonyl, Ethoxycarbonyl, Benzyl, 2-Phenylethyl und Tolyl.

Die genannten Reste können gegebenenfalls einen oder mehrere Substituenten tragen, z.B. Halogen, Alkyl, Hydroxyalkyl, Alkoxy, Aryl, Aryloxy, Alkylcarbonyl, Alkoxycarbonyl, Furfuryl, Tetrahydrofurfuryl, Amino, Monoalkylamino, Dialkylamino, Trialkylammonium, Amido, Hydroxy, Formyl, Carboxy, Mercapto, Cyano, Isocyanato, Nitro, Epoxy, SO₃H oder PO₄H₂. Unter den Halogenen sind Fluor, Chlor und Brom und insbesondere Chlor bevorzugt.

In besonderen Ausführungsformen der erfindungsgemäßen Membranen werden Silane der allgemeinen Formel IV' eingesetzt.

[(HS-R⁵)ₙR⁶-S-E-R-⁵]ₐSiXₓR₄₋ₐ₋ₓ (IV')

in der die Reste und Indices folgende Bedeutung haben:
- E =: -CO-NH-, -CS-NH-, -CH₂-CH₂- oder -CH₂-CH(OH)-
- R =: wie im Falle der allgemeinen Formel IV definiert;
- R⁵ =: Alkylen, Arylen, Arylenalkylen oder Arylenalkylen mit jeweils 1 bis 15 Koh- lenstoff-Atomen, wobei diese Reste durch Sauerstoff- und/oder durch Schwefel-Atome und/oder durch Ester- und/oder durch Carbonyl- und/ oder durch Carboxyl- und/oder durch Amid- und/oder durch Amino- Gruppen unterbrochen sein können;
- R⁶ =: Alkylen, Arylen, Arylenalkylen oder Arylenalkylen mit jeweils 1 bis 15 Koh- lenstoff-Atomen, wobei diese Reste durch Sauerstoff- und/oder durch Schwefel-Atome und/oder durch Ester- und/oder durch Carbonyl- und/ oder durch Carboxyl- und/oder durch Amid- und/oder durch Amino- Gruppen unterbrochen sein können;
- X =: wie im Falle der allgemeinen Formel IV definiert;
- a =: wie im Falle der allgemeinen Formel IV definiert;
- n =: 2, 3, 4 oder 5;
- x =: wie im Falle der allgemeinen Formel IV definiert.

Organisch modifizierte Silane der allgemeinen Formel IV', deren Herstellung sowie konkrete Beispiele sind in der DE 19627220 C2 ausführlichst beschrieben. Auf die Offenbarung der DE 19627220 C2 wird hier ausdrücklich Bezug genommen.

In der allgemeinen Formel V haben die Reste und Indices folgende Bedeutung, wobei bei Indices ≥ 2 die diesbezüglichen Reste gleich oder verschieden sind.

XₐSiR₄₋ₐ (V)

- R =: Alkyl, Alkenyl, Aryl, Alkylaryl oder Arylalkyl mit jeweils 1 bis 15 Kohlenstoff- Atomen, wobei diese Reste Sauerstoff- und/oder Schwefel-Atome und/ oder Ester- und/oder Carbonyl- und/oder Carboxyl- und/oder Amid- und/ oder Amino-Gruppen enthalten können.
- X =: Wasserstoff, Halogen, Hydroxy, Alkoxy, Acyloxy, Alkylcarbonyl, Alkoxycarb- onyl oder NR"₂, mit R" = Wasserstoff, Alkyl, Aryl oder Alkylaryl.
- a =: 1, 2 oder 3.

Die Alkyl-Reste sind z.B. geradkettige, verzweigte oder cyclische Reste mit 1 bis 20, insbesondere mit 1 bis 10 Kohlenstoff-Atomen und vorzugsweise niedere Alkyl-Reste mit 1 bis 6, besonders bevorzugt mit 1 bis 4 Kohlenstoff-Atomen. Spezielle Beispiele sind Methyl, Ethyl, n-Propyl, i-Propyl, n- Butyl, i-Butyl, s-Butyl, t-Butyl, n-Pentyl, n-Hexyl, Cyclohexyl, 2-Ethylhexyl, Dodecyl und Octadecyl. Die Alkenyl-Reste sind z.B. geradkettige, verzweigte oder cyclische Reste mit 2 bis 20, bevorzugt mit 2 bis 10 Kohlenstoff-Atomen und vorzugsweise niedere Alkenyl-Reste mit 2 bis 6 Kohlenstoff-Atomen, wie z.B. Vinyl, Allyl und 2-Butenyl. Bevorzugte Aryl-Reste sind Phenyl, Biphenyl und Naphthyl.

Die Alkoxy-, Acyloxy-, Alkylamino-, Dialkylamino-, Alkylcarbonyl-, Alkoxycarbonyl-, Arylaklyl-, Alkylaryl-, Alkylen- und Alkylenarylen-Reste leiten sich vorzugsweise von den oben genannten Alkyl- und Aryl-Resten ab. Spezielle Beispiele sind Methoxy, Ethoxy, n- und i-Propoxy, n-, i-, s- und t- Butoxy, Monomethylamino, Monoethylamino, Dimethylamino, Diethylamino, N-Ethylanilino, Acetyloxy, Propionyloxy, Methylcarbonyl, Ethylcarbonyl, Methoxycarbonyl, Ethoxycarbonyl, Benzyl, 2-Phenylethyl und Tolyl.

Die genannten Reste können gegebenenfalls einen oder mehrere Substituenten tragen, z.B. Halogen, Alkyl, Hydroxyalkyl, Alkoxy, Aryl, Aryloxy, Alkylcarbonyl, Alkoxycarbonyl, Furfuryl, Tetrahydrofurfuryl, Amino, Monoalkylamino, Dialkylamino, Trialkylammonium, Amido, Hydroxy, Formyl, Carboxy, Mercapto, Cyano, Isocyanato, Nitro, Epoxy, SO₃H oder PO₄H₂. Unter den Halogenen sind Fluor, Chlor und Brom und insbesondere Chlor bevorzugt.

Silane der allgemeinen Formel V sind entweder im Handel erhältlich oder lassen sich nach bekannten Methoden herstellen, die z.B. in "Chemie und Technologie der Silicone", W. Noll, Verlag Chemie GmbH, Weinheim/Bergstraße (1968), beschrieben sind.

Ohne Einschränkung der Allgemeinheit sind konkrete Beispiele für Silane der allgemeinen Formel V:
CH₃-Si-C'₃, CH₃-Si-(OC₂H₅)₃, C₂H₅-Si-Cl₃, C₂H₅-Si-(OC₂H₅)₃, CH₂=CH-Si-(OC₂H₅)₃, CH₂=CH-Si-(OC₂H₄OCH₃)₃, CH₂=CH-Si-(OOCCH₃)₃, (CH₃)₂-Si-(OC₂H₅)₂, (CH₃)₂SiCl_{2,} (C₂H₅)₃-Si-Cl, (C₂H₅)₂-Si-(OC₂H₅)₂, (CH₃)₂(CH₂=CH)-Si-Cl₂, (CH₃)₃-S-Cl, (t-C₄H₉)(CH₃)₂-Si-Cl, (CH₃O)₃-Si-C₃H₆-NH-C₂H₄-NH-C₂H₄-NH₂, (CH₃O)₃-Si-C₃H₆-SH, (CH₃O)₃-Si-C₃H₆-NH-C₂H₄-NH₂, (CH₃O)₃-Si-C₃H₆-Cl, (CH₃)₂(CH₂=CH-CH₂)-Si-Cl, (CH₃O)₃-Si-C₃H₆-O-C(O)-C(CH₃)=CH₂, (C₂H₅O)₃-Si-C₃H₆-NH₂, (C₂H₅O)₃-Si-C₃H₆-CN,

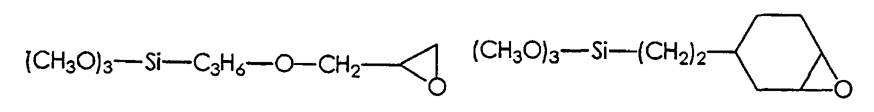

Die Silane der allgemeinen Formeln I, II, III, IV, IV' und V sind über die Reste X hydrolysierbar und polykondensierbar, und durch die hydrolytische Polykondensation wird ein anorganisches Netzwerk mit Si-O-Si-Brücken aufgebaut. Die Polykondensation erfolgt vorzugsweise nach dem Sol-Gel-Verfahren, wie es z.B. in den DE-A1 2758414, 2758415, 3011761, 3826715 und 3835968 beschrieben ist. Die Polykondensation wird in der auf diesem Gebiet üblichen Art und Weise durchgeführt, indem man z.B. den zu hydrolysierenden Silicium-Verbindungen, die entweder als solche oder gelöst in einem Lösungsmittel vorliegen, das erforderliche Wasser bei Raumtemperatur oder unter leichter Kühlung direkt zugibt (vorzugsweise unter Rühren und in Anwesenheit eines Hydrolyse- und Kondensationskatalysators) und die resultierende Mischung daraufhin einige Zeit (ein bis mehrere Stunden) rührt. Bei Anwesenheit reaktiver Verbindungen empfiehlt sich in der Regel eine stufenweise Zugabe des Wassers. Unabhängig von der Reaktivität der anwesenden Verbindungen erfolgt die Hydrolyse in der Regel bei Temperaturen zwischen -20 und 130 °C bzw. dem Siedepunkt des gegebenenfalls eingesetzten Lösungsmittels. Wie bereits angedeutet, hängt die beste Art und Weise der Zugabe von Wasser vor allem von der Reaktivität der eingesetzten Ausgangsverbindungen ab. So kann man z.B. die gelösten Ausgangsverbindungen langsam zu einem Überschuss an Wasser tropfen oder man gibt Wasser in einer Portion oder portionsweise den gegebenenfalls gelösten Ausgangsverbindungen zu. Es kann auch nützlich sein, das Wasser nicht als solches zuzugeben, sondern mit Hilfe von wasserhaltigen organischen oder anorganischen Systemen in das Reaktionssystem einzutragen. Als besonders geeignet hat sich in vielen Fällen die Eintragung der Wassermenge in das Reaktionsgemisch mit Hilfe von Feuchtigkeits beladenen Adsorbentien, z.B. von Molekularsieben, und von wasserhaltigen, organischen Lösungsmitteln, z.B. von 80 %-igem Ethanol, erwiesen. Die Wasserzugabe kann aber auch über eine chemische Reaktion erfolgen, bei der Wasser im Laufe der Reaktion freigesetzt wird. Beispiele hierfür sind Veresterungen.

Wenn ein Lösungsmittel verwendet wird, kommen neben den niederen aliphatischen Alkoholen (z.B. Ethanol oder i-Propanol) auch Ketone, vorzugsweise niedere Dialkylketone, wie Aceton oder Methylisobutylketon, Ether, vorzugsweise niedere Dialkylether wie Diethylether oder Dibutylether, THF, Amide, Ester, insbesondere Essigsäureethylester, Dimethylformamid, Amine, insbesondere Triethylamin, und deren Gemische in Frage.

Die Ausgangsverbindungen müssen nicht notwendigerweise bereits alle zu Beginn der Hydrolyse (Polykondensation) vorhanden sein, sondern es kann sich sogar als vorteilhaft erweisen, wenn nur ein Teil dieser Verbindungen zunächst mit Wasser in Kontakt gebracht wird und später die restlichen Verbindungen zugegeben werden.

Um Ausfällungen während der Hydrolyse und der Polykondensation so weit wie möglich zu vermeiden, kann die Wasserzugabe in mehreren Stufen, z.B. in drei Stufen, durchgeführt werden. Dabei kann in der ersten Stufe z.B. ein Zehntel bis ein Zwanzigstel der zur Hydrolyse benötigten Wassermenge zugegeben werden. Nach kurzem Rühren kann die Zugabe von einem Fünftel bis zu einem Zehntel der erforderlichen Wassermenge erfolgen und nach weiterem kurzen Rühren kann schließlich der Rest zugegeben werden.

Die Kondensationszeit richtet sich nach den jeweiligen Ausgangskomponenten und deren Mengenanteilen, dem gegebenenfalls verwendeten Katalysator, der Reaktionstemperatur, etc. Im Allgemeinen erfolgt die Polykondensation bei Normaldruck, sie kann jedoch auch bei erhöhtem oder bei verringertem Druck durchgeführt werden.

Das so erhaltene Polykondensat kann entweder als solches oder nach teilweiser oder nahezu vollständiger Entfernung des verwendeten Lösungsmittels zu den erfindungsgemäßen Membranen verarbeitet werden. In einigen Fällen kann es sich als vorteilhaft erweisen, in dem nach der Polykondensation erhaltenen Produkt das überschüssige Wasser und das gebildete und gegebenenfalls zusätzlich eingesetzte Lösungsmittel durch ein anderes Lösungsmittel zu ersetzen, um das Polykondensat zu stabilisieren. Zu diesem Zweck kann die Reaktionsmischung z.B. im Vakuum bei leicht erhöhter Temperatur so weit eingedickt werden, dass sie noch problemlos mit einem anderen Lösungsmittel aufgenommen werden kann.

Das auf diese Weise erhaltene Polykondensat stellt eine mehr oder weniger viskose Flüssigkeit oder ein Harz dar, und es wird nach üblichen Methoden zu Flachmembranen oder zu rohrförmigen Membranen verarbeitet. Nach der Formgebung und einer gegebenenfalls erforderlichen Trocknung wird die resultierende Membran durch Ausbildung eines organischen Netzwerkes gehärtet.

Die Silane der Formel I und daraus resultierende Polykondensate können über die bicyclischen Reste, die Silane der Formeln II und III und deren Polykondensate über die Reste B und die Silane der Formeln IV und IV' und deren Polykondensate über die Mercapto-Gruppen einer Polymerisation und/oder einer Polyaddition unterzogen werden. Durch diese Polymerisations- bzw. Polyadditionsreaktionen wird ein organisches Netzwerk aufgebaut. Das aus den Silanen der Formeln I bis V resultierende Polykondensat bzw. die daraus gefertigte Membran kann somit durch Polymerisation und/oder durch Polyaddition gehärtet werden. Diese Härtungsreaktionen werden thermisch und/oder strahlungsinduziert und/oder chemisch induziert durchgeführt. Nach der Härtung resultiert ein anorganisch-organisches Netzwerk, d.h. die erfindungsgemäßen Membranen verfügen über ein anorganisch-organisches Netzwerk. Durch Variation des anorganischen und/oder des organischen Netzwerkes, z.B. der Netzwerksdichte, können die chemischen und physikalischen Eigenschaften der erfindungsgemäßen Membranen in weiten Bereichen variiert und das Eigenschaftsprofil der erfindungsgemäßen Membranen kann den Anforderungen des jeweiligen Anwendungsfalles angepasst werden.

Das für die Herstellung der erfindungsgemäßen Membranen eingesetzte Polykondensat kann weitere Zusatzstoffe enthalten. Diese Zusatzstoffe können vor und/oder während und/oder nach der Polykondensation zugegeben werden. Bei diesen Zusatzstoffen handelt es sich z.B. um copolymerisierbare und/oder addierbare und/oder polyaddierbare Monomere und/oder Oligomere. Diese Monomere bzw. Oligomere werden im Zuge der Härtung der resultierenden Membran über Polymerisations- und/oder (Poly)Additionsreaktionen in das organische Netzwerk der erfindungsgemäßen Membran eingebaut. Werden hydrolysierbare Silicium-Verbindungen mit SH- bzw.- C=C- bzw. Amino-Gruppen eingesetzt und werden diese vor der hydrolytischen Polykondensation zugegeben, so werden diese Verbindungen im Zuge der Polykondensation in das anorganische und im Zuge der Polymerisation bzw. (Poly)Addition in das organische Netzwerk der erfindungsgemäßen Membranen eingebaut.

Weitere Zusatzstoffe, die das für die Herstellung der erfindungsgemäßen Membranen eingesetzte Polykondensat enthalten kann, sind z.B. Härtungskatalysatoren. Diese werden z.B. erforderlich, wenn die resultierende Membran chemisch induziert gehärtet wird.

Die aus dem Polykondensat gefertigten Membranen sind gaspermeabel und dicht. Werden poröse Membranen gewünscht, so können dem für die Herstellung der erfindungsgemäßen Membranen eingesetzten Polykondensat Additive zugesetzt werden, die Poren erzeugen und somit den erfindungsgemäßen Membranen eine Porosität verleihen. Derartige Additive sind z.B. flüchtige und/oder lösliche Zusatzstoffe, die nach der Härtung der Membran z.B. durch Temperaturerhöhung und/oder durch Herauslösen entfernt werden, so dass Hohlräume in der Membran verbleiben. So kann z.B. in den erfindungsgemäßen Membranen dadurch eine Porosität erzeugt werden, dass man Lösungsmittel (z.B. Essigester, Ethanol, Isopropanol, etc.) zum Polykondensat gibt und dieses nach der Härtung der Membran wieder entfernt. In das Harzsystem Nr. 1, das im Folgenden näher erläutert ist, können z.B. bis zu 25 Gew.-% verschiedene Lösungsmittel (z.B. Essigester, Ethanol, Isopropanol, etc.) eingerührt werden, ohne dass dessen Spinnbarkeit verloren geht. Nach der Härtung kann das noch in der Membran enthaltene Lösungsmittel schonend durch Lagerung bei Raumtemperatur oder forciert durch Erwärmung auf ca. 100 °C und Evakuierung quantitativ entfernt werden. Durch Zugabe von Ölen und deren Entfernung nach der Härtung der Membran werden größere Hohlräume, d.h. größere Poren erzeugt. Lösliche Stoffe, die zugesetzt werden können, sind z.B. Salze.

Es ist aber auch möglich, Poren dadurch zu erzeugen, dass man dem Polykondensat Treibmittel zusetzt, die vor der Härtung der Membran durch thermische Belastung (z.B. zwischen 150 und 250 °C) Gase freisetzen. Derartige Treibmittel sind z.B. Azo-Verbindungen, wie etwa Azodicarbonamide. Weitere Additive, die zur Porenerzeugung zugesetzt werden können, sind beispielsweise Hydrazin-Derivate (z.B. 4.4-Oxybis(benzolsulfohydrazid), Semicarbazide (z.B. p-Toluylensulfonylsemicarbazid), Tetrazole (z.B. 5-Phenyltetrazol) oder Benzoxazine (z.B. Isatosäureanhydrid).

Poren können in den erfindungsgemäßen Membranen auch dadurch erzeugt werden, dass durch thermisches Cracken bzw. durch Oxydation, z.B. durch Ausglühen bei 650 °C, der organische Anteil der Membran verändert oder ganz oder teilweise entfernt wird. Dadurch erhält man eine Porenstruktur im Nanometer-Bereich.

Die Poren erzeugenden Additive können auch selbst porös sein und verleihen damit der Membran durch ihre Anwesenheit eine Porosität. Ohne Einschränkung der Allgemeinheit sind derartige poröse Zusatzstoffe z.B. poröse Glaspartikel, Perlite, Zeolithe, Kieselgel, Kieselgur, Tonerde oder Aerosile in kugelförmiger bzw. gemahlener Form.

Zur Herstellung von z.B. Endlos-Flachmembranen werden bevorzugt lösungsmittelfreie Systeme eingesetzt, - lösungsmittelhaltige sind jedoch ebenfalls verarbeitbar, - die kontinuierlich auf eine rotierende Walze aufgetragen werden. Nach der Filmbildung mittels Spaltrakel erfolgt die Härtung, z.B. eine strahlungsinduzierte Härtung, die Ablösung und Aufwickelung der Membranen.

Zur Herstellung von z.B. Endlos-Hohlfasern werden bevorzugt lösungsmittelfreie Systeme eingesetzt, - lösungsmittelhaltige sind jedoch ebenfalls verarbeitbar, - aus denen wie folgt Hohlfasern gefertigt werden. Zunächst wird das harzförmige Polykondensat durch eine ringförmige Düse extrudiert, wobei der Hohlraum durch eine Gas bzw. Flüssigkeit führende Innendüse erzeugt wird. Die Dimension des Harzfadens wird nach üblichen Methoden durch die Variation der Spinnparameter, wie z.B. der Abzugsgeschwindigkeit, der Temperatur, des Drucks, etc., eingestellt. Anschließend wird durch eine ringförmige Vorhärtungskomponente, z.B. eine Strahlungsquelle, unmittelbar unterhalb der Spinndüse der Harzfaden vorvernetzt und damit die Form konserviert. Mittels eines darunter angebrachten Rundstrahlers wird die Endhärtung durchgeführt. Die resultierende Endlosfaser wird aufgewickelt und umgespult. Zur Vorhärtung und/oder zur Endhärtung kann neben einer strahlungsinduzierten Härtung auch eine selbst induzierte oder eine chemisch induziere Härtung durchgeführt werden. Eine Kombination verschiedener Härtungsprinzipien ist ebenfalls möglich.

Die Härtung der erfindungsgemäßen Membranen kann nach unterschiedlichen Härtungsprinzipien, d.h. thermisch, strahlungs- und/oder chemisch induziert, und nach üblichen Methoden durchgeführt werden. Gegebenenfalls ist die Zugabe von üblichen Härtungskatalysatoren erforderlich. Die Härtungsprinzipien und -methoden sind z.B. in der DE 4011044 C2, DE 4310733 A1, DE 4405261 A1, DE 4416857 C1, DE 19627198 C2 und der DE 19627220 C2 beschrieben.

Die erfindungsgemäßen Membranen sind in einphasiger wie auch in zweiphasiger Ausführung mit und ohne Porosität herstellbar. Die einphasige Ausführung findet insbesondere dort ihre Anwendung, wo Transparenz eine wichtige Rolle spielt. Zweiphasige Membranen werden aus Systemen erhalten, die nicht mischbar sind, sondern Emulsionen bilden. Derartige Systeme können sowohl zu Fasern als auch zu Folien verarbeitet werden, indem man z.B. durch gemeinsames Rühren eine Emulsion der nicht mischbaren Komponenten fertigt, diese Emulsion nach üblichen Methoden zu Membranen verarbeitet und bei der Härtung der resultierenden Membran die nicht-mischbaren Komponenten zusammen härtet. Eine andere Variante besteht darin, Systeme zu verarbeiten, bei denen es während der Synthese zur Phasentrennung kommt. Durch diese zweiphasigen Varianten lassen sich erfindungsgemäße Membranen fertigen, die aus einem stabilen organischanorganischen Netzwerk bestehen, in das eine durchgehende, hochpermeable zweite Phase eingelagert ist.

Das Herstellungsverfahren der erfindungsgemäßen Membranen ist einfach, kostengünstig und auf kleinstem Raum durchführbar. Es ist für die Endlosproduktion von Hohlfasern und Folien geeignet und es sind alle gängigen Härtungsprinzipien anwendbar. Auf Grund der toxikologischen Unbedenklichkeit der Materialien sind die erfindungsgemäßen Membranen im medizinischen Bereich problemlos anwendbar. Die für verschiedene Anwendungen oftmals notwendigen Oberflächenmodifikationen, z.B. zur Vermeidung von Blutkoagulationen, zur Einstellung der Polarität, des Adsorptionsverhaltens etc., können entweder schon während der Materialsynthese, d.h. in situ, oder nachträglich durchgeführt werden. Derartige Oberflächenmodifikationen sind z.B. Beschichtungen mit Heparin, mit hydrophilen oder hydrophoben Silanen, mit Fluorsilanen oder mit Biomolekülen.

Die erfindungsgemäßen Membranen zeigen bei hoher mechanischer Stabilität hohe Permeationswerte, auch ohne Porosität. Damit sind auch bei hohen Permeationswerten noch freitragende Folien und Hohlfasern herstellbar, ohne dass z.B. die Gefahr des Durchtritts der fluiden Phase besteht.

Durch folgende beispielhafte Modifikationen kann die Permeabilität der Membran den Anforderungen des jeweiligen Anwendungsfalles angepasst werden.
- Variation der anorganischen und der organischen Strukturdichte
- Variation des Gehalts an Dimethylsilan-Einheiten
- Chemischer und physikalischer Einbau von anorganischen oder organischen vorgefertigten, hochpermeablen Monomeren, Oligomeren oder Polymeren
- Silanisierung freier SiOH-Gruppen mit Trimethylsilyl-Einheiten

### Variation der anorganischen Strukturdichte

Ohne Einschränkung der Allgemeinheit wird am Vergleich der folgenden Harzsysteme der Einfluss der anorganischen Strukturdichte auf O₂-Permeabilität, E-Modul und Festigkeit der resultierenden Membranen aufgezeigt. Die Ergebnisse dazu sind tabellarisch zusammengefasst. Ganz allgemein kann gesagt werden, dass eine Erhöhung der anorganischen Strukturdichte zu einer Erhöhung der mechanischen Stabilität und zu einer Erniedrigung der Sauerstoff-Permeabilität führt.

| | Edukte | molares Verhältnis |
|---|---|---|
| Harztyp 1: | Glycerin-1,3-dimethacrylat | 1.0 |
| | 3-Isocyanatopropyltriethoxysilan | 1.0 |
| | 1,12-Dodecandioldimethacrylat | 0.2 |
| Harztyp 2: | Trimethylolpropantriacrylat | 1.2 |
| | Mercaptopropylmethyldimethoxysilan | 1.0 |
| Harztyp 3: | Tris(2-Hydroxyethyl)isocyanurat-triacrylat | 1.0 |
| | Mercaptopropylmethyldimethoxysilan | 1.0 |
| | Tetraethoxysilan | 1.0 |
| Harztyp 4: | Trimethylolpropantriacrylat | 1.0 |
| | Mercaptopropylmethyldimethoxysilan | 1.0 |
| | Dimethyldiethoxysilan | 4.0 |
| Harztyp 5: | Trimethylolpropantriacrylat | 1.0 |
| | Mercaptopropylmethyldimethoxysilan | 1.0 |
| | Dimethyldiethoxysilan | 2.0 |
| | Methyltrimethoxysilan | 2.0 |
| Harztyp 6: | Trimethylolpropantriacrylat | 1.0 |
| | Mercaptopropylmethyldimethoxysilan | 1.0 |
| | Methyltrimethoxysilan | 4.0 |

| Harz-typ | Anzahl d. hydrolysier- und kondensierbaren Gruppen pro Basiseinheit. | O₂-Permeabilität [x] | E-Modul [MPa] | Festigkeit [MPa] |
|---|---|---|---|---|
| 1 | 3 | 0.09·10⁻¹⁰ | 2640 | 106 |
| 2 | 2 | 0.23·10⁻¹⁰ | 1520 | 59 |
| 3 | 4 | 0.07·10⁻¹⁰ | 3000 | 120 |

| | | | | |
|---|---|---|---|---|
| O₂-Permeabilität : x = cm³/cm·s·cmHg | | | | |

| Harz-typ | Anzahl d. hydrolysier- und kondensierbaren Gruppen pro Basiseinheit | O₂-Permeabilität [cm³/cm·s·cmHg] |
|---|---|---|
| 4 | 2 | 11.5·10⁻¹⁰ |
| 5 | 2.5 | 3.9·10⁻¹⁰ |
| 6 | 3 | 1.2·10⁻¹⁰ |

Beim Harztyp 1 werden zunächst, gemäß folgendem Reaktionsschema, Glycerin-1,3-dimethacrylat und 3-lsocyanatopropyltriethoxysilan miteinander verknüpft. Das resultierende Silan wird zum Aufbau des anorganischen Netzwerkes hydrolytisch polykondensiert, wobei das 1,12-Dodecandioldimethacrylat vor, während oder nach der Polykondensation zugegeben werden kann. Aus der resultierenden Mischung werden nach üblichen Verfahren Membranen gefertigt, bei deren Härtung durch Polymerisation der Methacrylat-Gruppen aus dem Polykondensat und dem 1,12-Dodecandioldimethacrylat das organische Netzwerk aufgebaut wird.

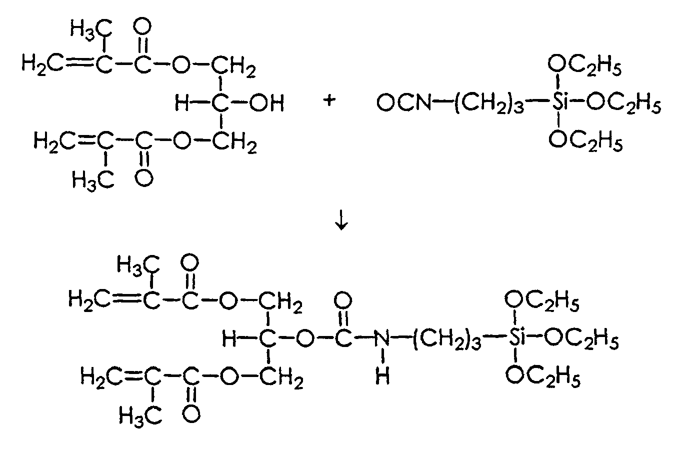

Beim Harztyp 2 werden zunächst, gemäß folgendem Reaktionsschema, das Trimethylolpropantriacrylat und das Mercaptopropylmethyldimethoxysilan miteinander verknüpft.

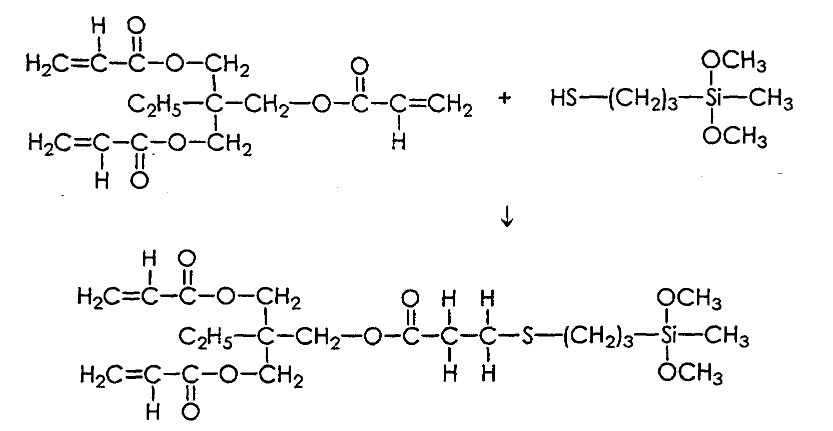

Das resultierende Silan wird zum Aufbau des anorganischen Netzwerkes hydrolytisch polykondensiert. Aus dem Polykondensat werden dann nach üblichen Verfahren Membranen gefertigt, bei deren Härtung durch Polymerisation der Acrylat-Gruppen das organische Netzwerke aufgebaut wird.

Beim Harztyp 3 werden zunächst, gemäß folgendem Reaktionsschema, das Tris(2-Hydroxyethyl)isocyanurat-triacrylat und das Mercaptopropylmethyldimethoxysilan miteinander verknüpft.

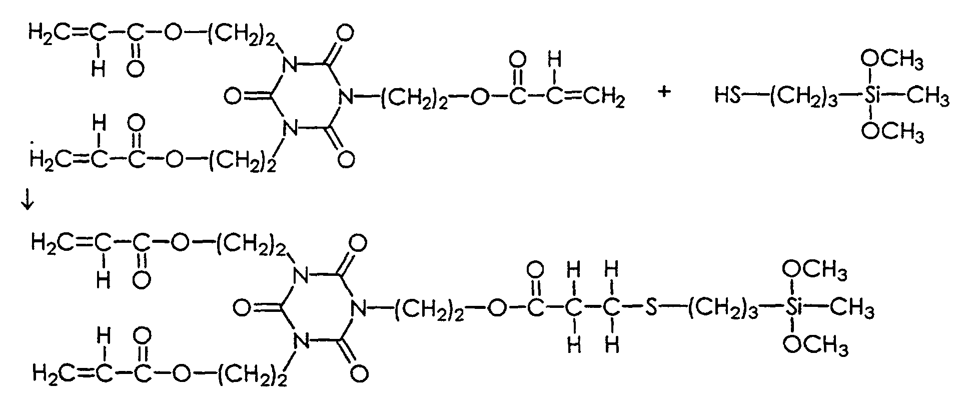

Anschließend wird zum Aufbau des anorganischen Netzwerkes das resultierende Silan zusammen mit dem Tetraethoxysilan hydrolytisch polykondensiert, und die daraus gefertigte Membran wird durch Polymerisation der Acrylat-Gruppen gehärtet.

Beim Harztyp 4 werden zunächst, in Analogie zum Harztyp 2, das Trimethylolpropantriacrylat und das Mercaptopropylmethyldimethoxysilan miteinander verknüpft. Anschließend wird das resultierende Silan, zusammen mit dem Dimethyldiethoxysilan, hydrolytisch polykondensiert, und die daraus gefertigte Membran wird durch Polymerisation der Acrylat-Gruppen gehärtet.

Beim Harztyp 5 werden zunächst, in Analogie zum Harztyp 2, das Trimethylolpropantriacrylat und das Mercaptopropylmethyldimethoxysilan miteinander verknüpft. Das resultierende Silan wird zusammen mit dem Dimethyldiethoxysilan und dem Methyltrimethoxysilan hydrolytisch polykondensiert und die daraus gefertigte Membran wird durch Polymerisation der Acrylat-Gruppen gehärtet.

Beim Harztyp 6 werden zunächst, in Analogie zum Harztyp 2, das Trimethylolpropantriacrylat und das Mercaptopropylmethyldimethoxysilan miteinander verknüpft. Anschließend wird das resultierende Silan, zusammen mit dem Methyltrimethoxysilan, hydrolytisch polykondensiert, und die daraus gefertigte Membran wird durch Polymerisation der Acrylat-Gruppen gehärtet.

Bei gleichem organischen Vernetzungspotential ergibt sich wegen des höheren anorganischen Vernetzungspotentials von Harztyp 1 ein gegenüber Harztyp 2 höherer E-Modul, eine höhere Biegebruchfestigkeit und ein erniedrigter O₂-Permeationskoeffizient. Die Zugabe des vierfach hydrolysier- und kondensierbaren Tetraethoxysilan bewirkt beim Harztyp 3 gegenüber Harztyp 2 eine Erhöhung der anorganischen Vernetzungsdichte bei gleichzeitiger Reduzierung der O₂-Permeabilität. Der Vergleich der Harztypen 4, 5 und 6 zeigt, dass der Ersatz von Methyl-Gruppen durch das Vernetzungspotential erhöhenden Alkoxy-Gruppen zu einer Reduzierung der O₂-Permeabilität führt.

### Variation der organischen Strukturdichte, Silanisierung von SiOH-Gruppen und Einbau von permeationssteigernden Monomeren

Ohne Einschränkung der Allgemeinheit wird am Vergleich von weiteren Harztypen der Einfluss der organischen Strukturdichte auf O₂-Permeabilität, E-Modul und Festigkeit der resultierenden Membranen aufgezeigt. Die Ergebnisse dazu sind tabellarisch zusammengefasst. Ganz allgemein kann gesagt werden, dass eine Verringerung des organischen Vernetzungspotentials eine deutliche Reduzierung der mechanischen Festigkeit und eine Erhöhung der O₂-Permeabilität bewirkt. Durch die Silanisierung von SiOH-Gruppen und/oder durch den Einbau von Reaktivmonomeren kann die O₂-Permeabilität der erfindungsgemäßen Membranen weiter erhöht werden.

Die Polykondensate sind in der Regel nicht vollständig anorganisch kondensiert, d.h. es sind freie Si-OH-Gruppen vorhanden. Diese können im Rahmen einer Silanisierung z.B. zu Si-O-Si(CH₃)₃-Gruppen umgesetzt werden. Dies bewirkt zum einen eine Auflockerung der Gesamtstruktur der erfindungsgemäßen Membran und zum anderen eine Erhöhung der Zahl der die O₂-Permeabilität begünstigenden Si-O-Si-Gruppen. Kontrolliert wird die Silanisierung durch Aufnahme des IR-Spektrums anhand des Verschwindens der verbliebenen SiOH-Bande.

| Harz-typ | Anzahl d. org. vernetzbaren Gruppen pro Basiseinheit | O₂-Permeabilität [ x ] | E-Modul [MPa] |
|---|---|---|---|
| 2 | 2 | 0.23 · 10⁻¹⁰ | 1520 |
| 7 | 1 | 3.2 · 10⁻¹⁰ | 11.2 |

| | | | |
|---|---|---|---|
| O₂-Permeabilität : x = cm³/cm·s·cmHg | | | |

| Harztyp | O₂-Permeabilität [cm³/cm·s·cmHg] |
|---|---|
| 2 | 2.3 10⁻¹⁰ |
| 8 | 13.9 · 10⁻¹⁰ |
| 9 | 13.2 · 10⁻¹⁰ |
| 10 | 20 · 10⁻¹⁰ |

| | Edukte | molares Verhältnis |
|---|---|---|
| Harztyp 2 : | Trimethylolpropantriacrylat | 1.2 |
| | Mercaptopropylmethyldimethoxysilan | 1.0 |
| Harztyp 2' : | silanisierter Harztyp 2 | |
| Harztyp 7 : | 1.12-Dodecandioldimethacrylat | 1.0 |
| | Mercaptopropylmethyldimethoxysilan | 1.0 |
| Harztyp 8 : | Silanisierter Harztyp 7 | |
| Harztyp 9 : | silanisierter Harztyp 2 | 2.0 |
| | Methacryloxypropyltris(trimethylsiloxy)silan (TRIS) | 1.0 |
| Harztyp 10: | silanisierter Harztyp 7 | 3.0 |
| | 1,3-Bis(3-methacryloxypropyl)tetrakis(trimethylsiloxy)disiloxan (TETRAKIS) | 1.0 |

Die Herstellung von Membranen aus dem Harztyp 2 ist bei der Diskussion der anorganischen Strukturdichte beschrieben.

Beim Harztyp 7 werden zunächst, gemäß dem folgenden Reaktionsschema, das 1.12-Dodecandioldimethacrylat und das Mercaptopropylmethyldimethoxysilan mit einander verknüpft.

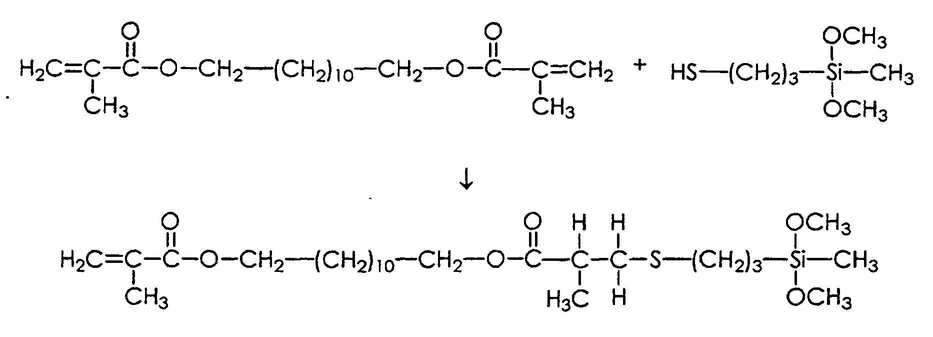

Anschließend wird das resultierende Silan hydrolytisch polykondensiert, und die daraus gefertigte Membran wird durch Polymerisation der Methacrylat-Gruppen gehärtet.

Beim Harztyp 8 werden zunächst, gemäß dem folgenden Reaktionsschema, nach der Polykondensation noch vorhandene SiOH-Gruppen des Harztyps 7 silanisiert.

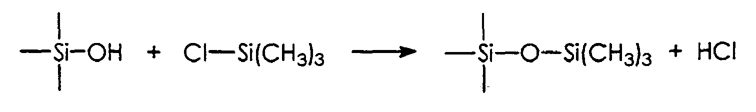

Die daraus gefertigten Membranen werden durch Polymerisation der Methacrylat-Gruppen gehärtet.

Bei den Harztypen 9 und 10 werden nach der Silanisierung die Reaktivmonomere 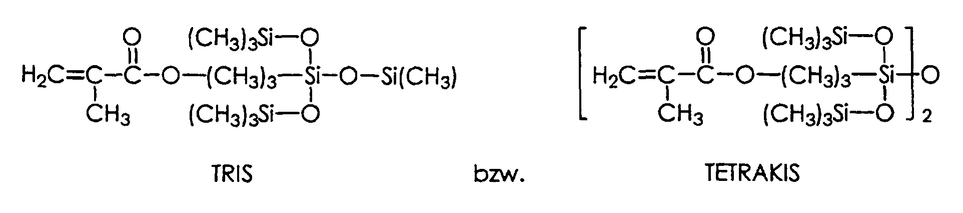 eingearbeitet, und die daraus gefertigten Membranen werden durch Polymerisation der Methacryl-Gruppen gehärtet.

Bei gleicher anorganischer Vernetzung der Harztypen 2 und 7 bewirkt eine Verringerung des organischen Vernetzungspotentials von Harztyp 7 eine deutliche Reduktion des E-Moduls und eine Erhöhung der Permeation. Harztyp 8 zeigt, im Vergleich zu Harztyp 7, als Folge der Silanisierung eine weitere Erhöhung der O₂-Permeabilität. Im Vergleich zum Harztyp 8 wird beim Harztyp 9 durch die Zugabe des Reaktivmonomers TRIS der Einbau von die O₂-Permeation begünstigenden Endgruppen in die resultierende Membran bewirkt. Im Vergleich zum Harztyp 8 wird beim Harztyp 10 durch die Zugabe der Vernetzungskomponente TETRAKIS die O₂-Permeabilität der resultierenden Membran weiter erhöht.

### Einbau von Dimethylsiloxan-Strukturen

Die O₂-Permeabilität der resultierenden Membran wird z.B. durch den Einbau von Dimethylsiloxan-Strukturen ebenfalls erhöht. Ohne Einschränkung der Allgemeinheit erfolgt der Einbau in das Polykondensat z.B. durch Co-Kondensation von z.B. Dimethyldialkoxysilan, durch Addition von Amino terminierten Polydimethylsiloxan oder durch Co-Polymerisation von Acryloxy terminiertem Polydimethylsiloxan. Der daraus resultierende Variationsbereich der O₂-Permeation beträgt drei Größenordnungen.

Bei den folgenden Beispielen, deren Ergebnisse tabellarisch zusammengefasst sind, erfolgt der Einbau der Dimethylsiloxan-Strukturen in das Polykondensat durch Co-Polymerisation.

| Harztyp | Zahl d. -Si(CH₃)₂-O-Gruppen/Basiseinheit | O₂-Permeabilität [ x ] |
|---|---|---|
| 11 | 0 | 0.09 · 10⁻¹⁰ |
| 12 | 4 | 22 · 10⁻¹⁰ |
| 13 | 6 | 66 · 10⁻¹⁰ |
| 14 | 8 | 120 · 10⁻¹⁰ |
| 15 | 10 | 140 · 10⁻¹⁰ |

| | | |
|---|---|---|
| O₂-Permeabilität : x = cm³/cm·s·cmHg | | |

| | Edukte | molares Verhältnis |
|---|---|---|
| Harztyp 11: | Glycerin-1.3-dimethacrylat | 1 |
| | Isocyanatopropyltriethoxysilan | 1 |
| | Dimethyldiethoxysilan | 0 |
| Harztyp 12: | Glycerin-1.3-dimethacrylat | 1 |
| | Isocyanatopropyltriethoxysilan | 1 |
| | Dimethyldiethoxysilan | 4 |
| Harztyp 13: | Glycerin-1.3-dimethacrylat | 1 |
| | Isocyanatopropyltriethoxysilan | 1 |
| | Dimethyldiethoxysilan | 6 |
| Harztyp 14: | Glycerin-1.3-dimethacrylat | 1 |
| | Isocyanatopropyltriethoxysilan | 1 |
| | Dimethyldiethoxysilan | 8 |
| Harztyp 15: | Glycerin-1.3-dimethacrylat | 1 |
| | Isocyanatopropyltriethoxysilan | 1 |
| | Dimethyldiethoxysilan | 10 |

Bei den Harztypen 11 bis 15 werden zunächst, gemäß folgendem Reaktionsschema, Glycerin-1,3-dimethacrylat und 3-lsocyanatopropyltriethoxysilan miteinander verknüpft. Das resultierende Silan wird dann zum Aufbau des anorganischen Netzwerkes entweder alleine (Harztyp 11) oder zusammen mit dem Dimethyldiethoxysilan (Harztyp 12 bis 15) hydrolytisch polykondensiert. Aus dem Polykondensat werden nach übliche Methoden Membranen gefertigt, bei deren Härtung durch Polymerisation der Methacrylat-Gruppen das organische Netzwerk aufgebaut wird.

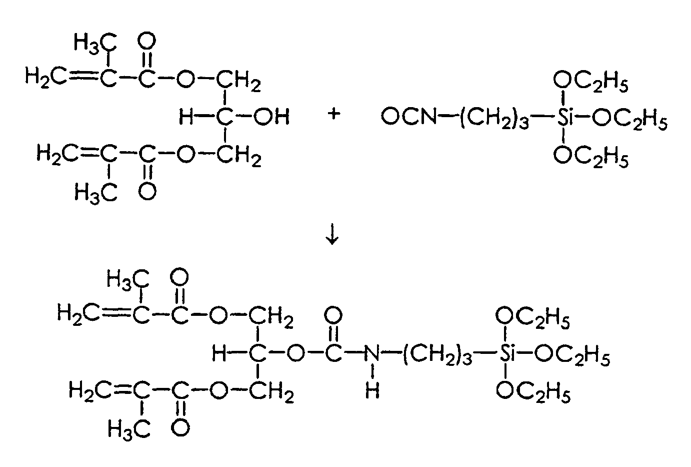

Bei weiteren Ausführungsbeispielen erfolgt der Einbau von Dimethylsiloxan-Einheiten in das Polykondensat durch Co-Polykondensation mit Dimethyldiethoxysilan. Die Ergebnisse dazu sind tabellarisch zusammengefasst.

| | Edukte | molares Verhältnis |
|---|---|---|
| Harztyp 16: | "Norbornen-Silan" | 1 |
| | Trimethylpropan-tris(3-mercaptopropionat | 1 |
| | Dimethyldiethoxysilan | ½ |
| Harztyp 17: | "Norbornen-Silan" | 1 |
| | Trimethylpropan-tris(3-mercaptopropionat | 1 |
| | Dimethyldiethoxysilan | 2 |
| Harztyp 18: | "Norbornen-Silan" | 1 |
| | Trimethylpropan-tris(3-mercaptopropionat | 1 |
| | Dimethyldiethoxysilan | 4 |
| Harztyp 19: | "Norbornen-Silan" | 1 |
| | Trimethylpropan-tris(3-mercaptopropionat | 1 |
| | Dimethyldiethoxysilan | 6 |

| | | |
|---|---|---|
| O₂-Permeabilität : x = cm³/cm·s·cmHg | | |

| Harztyp | Zahl d. -Si(CH₃)₂-O-Gruppen/Basiseinheit | O₂-Permeabilität [ x ] |
|---|---|---|
| 16 | ½ | 1.7 · 10⁻¹⁰ |
| 17 | 2 | 4.0 · 10⁻¹⁰ |
| 18 | 4 | 9.1 · 10⁻¹⁰ |
| 19 | 6 | 31 · 10⁻¹⁰ |

Zunächst wird das "Norbornen-Silan" der Harztypen 16 bis 19 gemäß folgendem Reaktionsschema hergestellt, 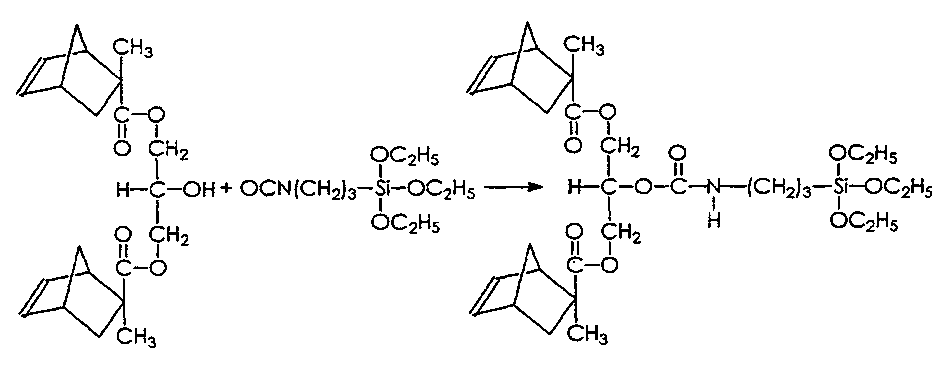 und anschließend mit dem Dimethyldiethoxysilan hydrolytisch polykondensiert. Das resultierende Polykondensat wird mit Trimethylpropan-tris(3-mercaptopropionat versetzt und zu Membranen verarbeitet, deren Härtung dann durch strahlungsinduzierte Polyaddition des Trimethylpropan-tris(3-mercaptopropionat an die C=C-Doppelbindungen der Norbornen-Reste erfolgt.

In den folgenden Beispielen erfolgt der Einbau der Dimethylsiloxan-Einheiten in das Polykondensat durch Addition von Aminopropyl-terminiertem Polydimethylsiloxan mit ca. 65 -Si(CH₃)₂-O-Segmenten (= DMS A 21). Die Ergebnisse dazu sind tabellarisch zusammengefasst.

| Harztyp | Zahl d. -Si(CH₃)₂-O-Gruppen/Basiseinheit | O₂-Permeabilität [ x ] |
|---|---|---|
| 20 | 2 | 19 · 10⁻¹⁰ |
| 21 | 6 | 160 · 10⁻¹⁰ |

| | | |
|---|---|---|
| O₂-Permeabilität : x = cm³/cm·s·cmHg | | |

| | Edukte | molares Verhältnis |
|---|---|---|
| Harztyp 20: | Trimethylolpropantriacrylat | 1.2 |
| | Mercaptopropylmethyldimethoxysilan | 1.0 |
| | DMS-A 21 | 0.03 |
| | Lösungsmittel : n-Butylacetat | |
| Harztyp 21: | Trimethylolpropantriacrylat | 1.2 |
| | Mercaptopropylmethyldimethoxysilan | 1.0 |
| | DMS-A 21 | 0.09 |
| | Lösungsmittel : n-Butylacetat | |

Beim Harztyp 20 und 21 werden zunächst, gemäß folgendem Reaktionsschema, das Trimethylolpropantriacrylat und das Mercaptopropylmethyldimethoxysilan miteinander verknüpft.

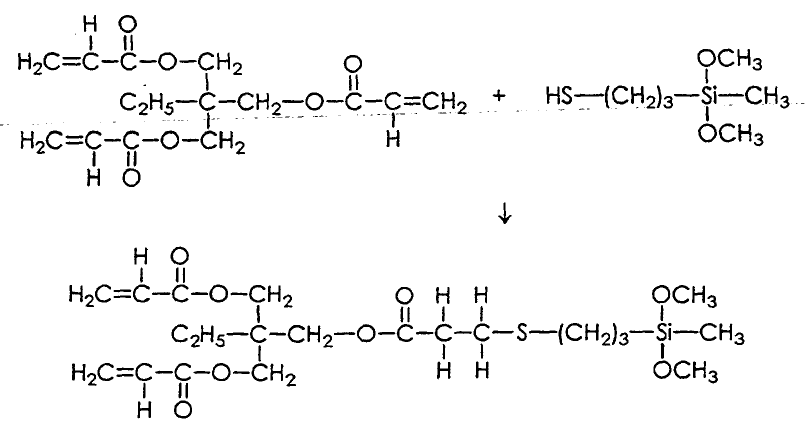

Für die Weiterverarbeitung des resultierenden Silans zu den erfindungsgemäßen Membranen gibt es zwei Varianten:
- Das resultierende Silan wird zunächst zum Aufbau des anorganischen Netzwerkes hydrolytisch polykondensiert, und das Polykondensat wird dann mit dem Polydimethylsiloxan über die Addition von Acrylat- und Amino-Gruppen verknüpft.
- Das resultierende Silan wird zunächst mit dem Polydimethylsiloxan über die Addition von Acrylat- und Amino-Gruppen verknüpft, und das Additionsprodukt wird dann zum Aufbau des anorganischen Netzwerkes hydrolytisch polykondensiert.

Die aus dem resultierenden Polykondensat gefertigte Membran wird dann zum Aufbau des organischen Netzwerkes durch Polymerisation der Acrylat-Gruppen gehärtet, und das Lösungsmittel wird quantitativ entfernt.

Beim folgenden Ausführungsbeispiel werden Dimethylsiloxan-Einheiten durch Co-Polymerisation mit einem relativ kurzkettigen Polydimethylsiloxan, das terminale Acrylat-Gruppen enthält und aus ca. 14 Dimethylsiloxan-Einheiten besteht (PDMS U22 von ABCR), in das Polykondensat eingearbeitet. Das Ergebnisse dazu enthält folgende Tabelle.

| Harztyp | Zahl d. -Si(CH₃)₂-O-Gruppen/Basiseinheit | O₂-Permeabilität [ x ] |
|---|---|---|
| 22 | 1.5 | 6.8 · 10⁻¹⁰ |

| | | |
|---|---|---|
| O₂-Permeabilität : x = cm³/cm·s·cmHg | | |

| | Edukte | molares Verhältnis |
|---|---|---|
| Harztyp 22: | Glycerin-1,3-dimethacrylat | 8.0 |
| | 3-Isocyanatopropyltriethoxysilan | 8.0 |
| | 1,12-Dodecandioldimethacrylat | 1.6 |
| | PDMS U22 | 1.0 |

Zunächst werden, in Analogie zum Harztyp 1, Glycerin-1,3-dimethacrylat und 3-Isocyanatopropyltriethoxysilan miteinander verknüpft. Das resultierende Silan wird zum Aufbau des anorganischen Netzwerkes hydrolytisch polykondensiert, wobei das 1,12-Dodecandioldimethacrylat und/oder das PDMS U22 vor, während oder nach der Polykondensation zugegeben werden kann. Dann wird durch Co-Polymerisation der Acrylat- und der Methacrylat-Gruppen das PDMS U22 im Polykondensat chemisch verankert. Aus der resultierenden Mischung werden nach üblichen Verfahren Membranen gefertigt, bei deren Härtung durch Polymerisation der restlichen Methacrylat-Gruppen das organische Netzwerk weiter aufgebaut wird.

In der folgenden Tabelle sind die O₂-Permeabilitäten silanisierter und nicht-silanisierter Systeme zusammengestellt. Es ist deutlich zu erkennen, dass die Silanisierung freier -OH-Einheiten durch z.B. Trimethylsilyl-Einheiten eine Erhöhung der O₂-Permeabilität zur Folge hat.

| Harztyp | O₂-Permeabilität [ x ] silanisiert | O₂-Permeabilität [ x ] nicht-silanisiert |
|---|---|---|
| 2 | 2.3 · 10⁻¹⁰ | 0.23 · 10⁻¹⁰ |
| 4 | 25 · 10⁻¹⁰ | 11.5 · 10⁻¹⁰ |
| 7 | 13.9 · 10⁻¹⁰ | 3.2 · 10⁻¹⁰ |

| | | |
|---|---|---|
| O₂-Permeabilität : x = cm³/cm·s·cmHg | | |

Edukte und Herstellung der Harztypen 2, 4 und 7 sind bei der Variation der anorganischen und der organischen Strukturdichte beschrieben. Die Silanisierung der Polykondensate erfolgt gemäß folgendem Reaktionsschema durch Umsetzung mit Trimethylchlorsilan.

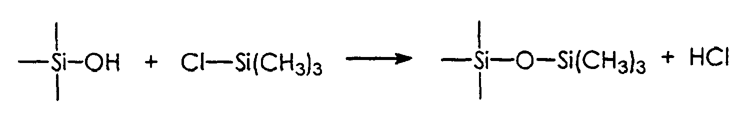

Alternativ kann die Silanisierung durch Zugabe von Hexamethyldisilazan (HMDS) dem mit Tetrahydrofuran (THF) verdünnten Ansatz unter Argon-Atmosphäre durchgeführt werden. Dadurch werden ebenfalls freie Si-OH-Gruppen zu Si-CH₃-Gruppen umgesetzt.

Die daraus gefertigten Membranen sind durch Polymerisation der Acrylat- bzw. Methacrylat-Gruppen gehärtet. Auf die Prozessparameter beim Spinnen bzw. Foliengießen hat die Silanisierung keine Auswirkung, sofern sie unmittelbar vor der Weiterverarbeitung erfolgt und damit den Alterungseffekt nicht beeinflusst.

Ausführungsbeispiel für zweiphasige Systeme

| Harztyp | O₂-Permeabilität [ x ] |
|---|---|
| 23 | 21 · 10⁻¹⁰ |

| | |
|---|---|
| O₂-Permeabilität: x = cm³/cm·s·cmHg | |

| | Edukte | molares Verhältnis |
|---|---|---|
| Harztyp 23: | Trimethylolpropantriacrylat | 1 |
| | Mercaptopropylmethyldimethoxysilan | 1 |
| | Dimethyldiethoxysilan | 4 |
| | DMS-A 21 | 0.33 |

Beim Harztyp 23 wird zunächst, wie beim Harztyp 4 beschrieben, das Trimethylolpropantriacrylat und das Mercaptopropylmethyldimethoxysilan miteinander verknüpft. Anschließend wird das resultierende Silan, zusammen mit dem Dimethyldiethoxysilan, hydrolytisch polykondensiert. Das resultierende Polykondensat ist mit dem Amino terminierten Polydimethylsiloxan nicht mischbar, man erhält ein zweiphasiges Mischsystem, das sich zu milchig-trüben Membranen verarbeiten lässt, deren Härtung durch Polymerisation der Acrylat-Gruppen erfolgt.

Die erfindungsgemäßen Membranen können für Trennprozesse, z.B. in der Ultra- oder Hyperfiltrationstechnik, bei der Dialyse, bei der Gasseparation, bei der Gaspermeation, der Elektrodialyse, bei der extrakorporalen Beatmung, als künstliche Blutgefäße oder in der Medizintechnik (z.B. als Ersatz von PVC- oder Siliconschläuchen) eingesetzt werden. Die erfindungsgemäßen Membranen zeigen eine ausgezeichnete Permeationsrate für O₂ und CO₂, so dass sie z.B. für den Einsatz in Oxygenatoren hervorragend geeignet sind.

Im folgenden wird die Herstellung der erfindungsgemäßen Membranen an konkreten Ausführungsbeispielen näher erläutert.

Die Ausführungsbeispiele 1 bis 3 betreffen die Herstellung von Folien und Hohlfasern bzw. Kapillaren. Diese Systeme sind hochvernetzt, nicht porös und vergleichsweise gasundurchlässig.

Beispiel 4 betrifft eine Modifikation eines der Grundsysteme in Richtung noch geringerer Gasdurchlässigkeit durch den Einbau von Tetraethoxysilan (TEOS).

Die Beispiele 5 bis 10 betreffen gezielte Modifikationen auf der Grundlage dieser Systeme in Richtung einer erhöhten Gasdurchlässigkeit. Als Maß für die Gaspermeabilität ist die O₂-Permeabilität angegeben (Einheit Barrer = 10⁻¹⁰ cm³ (STP) / cm·s·cm Hg).

Beispiel 11 betrifft die Herstellung poröser Strukturen und Beispiele 12 betrifft durch Pyrolyse der Membranen erhaltene mikroporöse Systeme.

### Beispiel 1

| | | |
|---|---|---|
| Edukte : | Glycerin-1,3-dimethacrylat | 1 mol |
| | 3-Isocyanatopropyltriethoxysilan | 1 mol |
| | 1,12-Dodecandioldimethacrylat | 0,2 mol |

Die Synthese des Harzes erfolgt wie in der DE 195 36 498 A1, Seite 4, Zeile 15 bis 62, beschrieben.

### Hohlfaserherstellung:

Das mit einem Photoinitiator (z.B. 2 % lrgacure 184, Fa. Ciba Geigy) versetzte Harz (Viskosität bei Verarbeitungstemperatur (10 °C) ca. 100 Pas) wird durch eine ringförmige Düse extrudiert (Außendurchmesser ca. 1 mm, Ringstärke ca. 0,2 mm). Durch eine N₂-gespülte zweite co-zentrische Innendüse wird die Hohlfaden-Geometrie zunächst stabilisiert, bis durch eine Kombination zweier UV-Strahlungseinheiten (z.B. Blue-Point II, Fa. Hönle mit einem Rundstrahler F 300, Firma Fusion) die organische Aushärtung erfolgt

| | | |
|---|---|---|
| Spinnparameter : | Spinntemperatur : | 8 °C |
| | Spinndruck : | 15 bar |
| | Abzugsgeschwindigkeit : | 0,8 m/s |

Anschließend wird die Hohlfaser aufgespult. Durch Variation der Spinnparameter (Spinnmassentemperatur, Druck, Abzugsgeschwindigkeit, Gas-Durchflussrate durch den Innenkanal) lässt sich die Fasergeometrie in weiten Bereichen variieren. Im vorliegenden Fall lagen die minimalen im Dauerbetrieb erzielten Fasergeometrien bei ca. 50 µm Außendurchmesser und ca. 10 µm Wandstärke. Die größten erzielten Hohlfaser-Dimensionen lagen bei ca. 2 mm Außendurchmesser und 0,2 mm Wandstärke.

### Folienherstellung :

Das mit einem Photoinitiator (z.B. 1 % Irgacure 184, Fa. Ciba Geigy) versetzte Harz wird mittels eines Spaltrakels auf eine hochpolierte Walze aufgebracht. Nach dem Durchlauf durch eine UV-Härtungseinheit (z. B. UVAPRINT CM, Firma Hönle) wird die Folie abgelöst und aufgewickelt. Durch Variation der Walzen-Umlaufgeschwindigkeit, der Walzentemperatur und Spalthöhe konnten im vorliegenden Fall Folienstärken zwischen ca. 30 µm und 200 µm eingestellt werden.

### Eigenschaften :

| | |
|---|---|
| O₂-Permeationskoeffizient [10⁻¹⁰ cm³ (STP) / cm·s cm Hg] : | 0.09 |
| E-Modul [MPa] : | 2640 |
| Zugfestigkeit [MPa] : | 106 |

### Beispiel 2

| | | |
|---|---|---|
| Edukte : | Trimethylolpropantriacrylat TMPTA) | 1.2 (1) mol |
| | Mercaptopropylmethyldimethoxysilan | 1 mol |

Die Synthese des Harzes erfolgt wie in der DE 40 11 044 C2 im Beispiel 1 auf Seite 10, Zeile 28 bis 50, beschrieben.

### Faser-/Folienherstellung:

Die Faser-/Folienherstellung erfolgt analog zu Beispiel 1. Die erzielten minimalen Hohlfaserdimensionen lagen bei ca. 350 µm Außendurchmesser und 50 µm Wandstärke.

### Eigenschaften :

| | |
|---|---|
| O₂-Permeationskoeffizient [10⁻¹⁰ cm³ (STP)/cm·s cm Hg] : | 0.23 |
| E-Modul [MPa] : | 1520 |
| Zugfestigkeit [MPa] : | 59 |

### Beispiel 3

| | | |
|---|---|---|
| Edukte : | "Norbornen-Silan" | 1 mol |
| | Dimethyldiethoxysilan | 2 mol |
| | Trimethylpropan-tris(3-mercaptopropionat) | 0,47 mol |

Das Verhältnis SH-Gruppen : C=C-Doppelbindungen liegt bei 0.71 : 1

### Synthese des "Norbomen-Silans" :

Wie bei den Harztypen 16 bis 19 erläutert und wie in der DE 196 27 198 C2 in Beispiel 11 und 12 auf Seite 34, Zeile 42, bis Seite 35, Zeile 22, beschrieben.

### Synthese des Harzes :

Nach Vorlage von 13.31 g (21.9 mMol) werden 6.49 g (43.8 mMol) Dimethyldiethoxysilan eingewogen und bei 30 °C gerührt. Zur Hydrolyse und Kondensation werden 2.76 g Wasser (entsprechend 2 H₂O pro OR-Gruppe) und Katalysator zugesetzt. Nach ca. 28 h Rühren bei 30 °C wird der Ansatz nach Zusatz von Essigester und Ausschütteln in Wasser aufgearbeitet. Das resultierende Harz zeigt einen ausgeprägten und beherrschbaren Alterungseffekt (Viskositätsanstieg von 1000 auf 3000 Pa·s innerhalb von 20 Tagen (25 °C) und eine gute Verspinnbarkeit. Kurz vor der Weiterverarbeitung zu Fasern/Folien wird zu diesem Harz das Trimethylpropan-tris(3-mercaptopropionat zugegeben.

### Faserherstellung :

Es wurden Hohlschläuche von ca. 1000 µm Außendurchmesser und 100 µm Wandstärke und von hoher Flexibilität (80 % Bruchdehnung) hergestellt.

### Beispiel 4

Mit Tetraethoxysilan (TEOS)-modifizierte Basissysteme

| | | |
|---|---|---|
| Edukte : | Tris(2-Hydroxyethyl)isocyanurat-triacrylat (SR 368) | 1 mol |
| | Mercaptopropylmethyldimethoxysilan | 1 mol |
| | Tetraethoxysilan (TEOS) | 0.5 mol |
| | Lösungsmittel : Ethoxyethylacetat | 42.5 Gew.% |

### Synthese :

Zur Vorlage von 155.6 g (0.37 mol) SR 368 in 370 ml Ethoxyethylacetat werden 66.34 g (0.37 mol) Mercaptopropylmethyldimethoxysilan unter Schutzgasatmosphäre zugetropft. Unter Kühlung werden 23.95 g einer ethanolischen KOH-Lösung langsam zugetropft. Zur Hydrolyse und Kondensation der Methoxygruppen werden 10.64 g 0.5n HCI zugetropft. Nach 5 h Rühren werden TEOS und 21.88g 0.12n HCI zugegeben. Nach 20 h Rühren bei RT wird der Ansatz mit Wasser ausgeschüttelt, filtriert und auf einen Feststoffgehalt von 57.5 Gew.% einrotiert.

### Folienherstellung :

Um Rissbildungen infolge der die Polymerisation begleitenden Schrumpfung zu vermeiden, wurde mit sehr geringer Strahlungsintensität ausgehärtet (ca. 0.01 W/cm²). Das Lösungsmittel wurde nach der Aushärtung möglichst langsam entfernt.

### Eigenschaften :

Die Zugabe des vierfach hydrolyiser- und kondensierbaren TEOS bewirkt gegenüber dem Harz aus Beispiel 2 eine Erhöhung des anorganischen Vernetzungspotentials bei gleichzeitiger Reduktion der Sauerstoff-Permeabilität auf einen Wert von 0.07. Eine Porosität infolge des Lösungsmittelentzugs konnte nicht festgestellt werden.

### Beispiel 5

Der Austausch einer Methyl-Gruppe gegen eine das Vernetzungspotential erhöhenden Alkoxy-Gruppe führt zu einer Erhöhung der mechanischen Stabilität und gleichzeitigen Verminderung der Permeabilität.

| | | | |
|---|---|---|---|
| Harz A | Edukte : | TMPTA | 1 mol |
| | | Mercaptopropylmethyldimethoxysilan | 1 mol |
| | | Dimethyldiethoxysilan | 4 mol |
| | | Methyltrimethoxysilan | -- |
| | O₂-Permeabilität | [10⁻¹⁰ cm³ (STP) / cm·s cm Hg] | 11.5 |
| Harz B | Edukte : | TMPTA | 1 mol |
| | | Mercaptopropylmethyldimethoxysilan | 1 mol |
| | | Dimethyldiethoxysilan | 2 mol |
| | | Methyltrimethoxysilan | 2 mol |
| | O₂-Permeabilität | [10⁻¹⁰ cm³ (STP) / cm·s cm Hg] | 3.9 |
| Harz C | Edukte : | TMPTA | 1 mol |
| | | Mercaptopropylmethyldimethoxysilan | 1 mol |
| | | Dimethyldiethoxysilan | - |
| | | Methyltrimethoxysilan | 4 mol |
| | O₂-Permeabilität | [10⁻¹⁰ cm³ (STP) / cm·s cm Hg] | 1.2 |

### Synthese von Harz A :

Zur Vorlage von 89.03 g (0.3 mol) Trimethylpropantriacrylat (TMPTA) in 300 ml Essigester werden unter Argon-Atmosphäre und Eiskühlung 54.15 g (0.3 mol) Mercaplopropylmethyldimethoxysilan zugegeben. Anschließend werden langsam 19.55 g einer ethanolischen KOH-Lösung zugetropft. Nach Zugabe von 8.73 g 0.5n HCI und 10 min Rühren werden 178.03 g (1.2 mol) Dimethyldiethoxysilan und 35.0 g 0.12n HCI zugegeben. Nach 23 h Rühren bei RT wird der Ansatz mit Wasser ausgeschüttelt, filtriert und auf einen Feststoffgehalt von 89 % einrotiert.
Die Synthese der Harz-Varianten B und C erfolgt ganz analog.

### Beispiel 6:

### Einbau von die O₂-Permeation begünstigenden Crosslinkern (TERAKIS).

Das zweifach vernetzbare 1.3-Bis(3-Methacryloxypropyl)-tetrakis-(trimethylsiloxy) disiloxan (TETRAKIS) trägt zu einer Erhöhung des organischen Vernetzungspotentials bei und erhöht gleichzeitig die O₂-Permeation, weshalb es auch mit einem niedrig vernetzten System kombinierbar ist.

| | | | |
|---|---|---|---|
| Harz A | Edukte : | Dodecandiodimethacrylat | 1 mol |
| | | Mercaptopropylmethyldimethoxysilan | 1 mol |
| | O₂-Permeabilität | [10⁻¹⁰ cm³ (STP) / cm·s cm Hg] : | 3 |
| Harz B | Edukte : | Dodecandiodimethacrylat | 1 mol |
| | | Mercaptopropylmethyldimethoxysilan | 1 mol |
| | | TETRAKIS | ⅓ mol |
| | O₂-Permeabilität | [10⁻¹⁰ cm³ (STP) / cm·s cm Hg] : | 20 |

### Beispiel 7 Einbau von Dimethylsiloxan-Strukturen durch Kondensation

| | | | |
|---|---|---|---|
| Harz A | Edukte : | Glycerin-1.3-dimethacrylat | 1 mol |
| | | Isocyanatopropyltriethoxysilan | 1 mol |
| | | Dimethyldiethoxysilan | 0 mol |
| | O₂-Permeabilität | [10⁻¹⁰ cm³ (STP) / cm·s cm Hg] : | 0.09 |
| Harz B | Edukte : | Glycerin-1.3-dimethacrylat | 1 mol |
| | | Isocyanalopropyltriethoxysilan | 1 mol |
| | | Dimethyldiethoxysilan | 4 mol |
| | O₂-Permeabilität | [10⁻¹⁰ cm³ (STP) / cm·s cm Hg] : | 22 |
| Harz C | Edukte : | Glycerin-1.3-dimethacrylat | 1 mol |
| | | Isocyanatopropyltriethoxysilan | 1 mol |
| | | Dimethyldiethoxysilan | 6 mol |
| | O₂-Permeabilität | [10⁻¹⁰ cm³ (STP) / cm·s cm Hg] : | 66 |
| Harz D | Edukte : | Glycerin-1.3-dimethacrylat | 1 mol |
| | | Isocyanatopropyltriethoxysilan | 1 mol |
| | | Dimethyldiethoxysilan | 8 mol |
| | O₂-Permeabilität | [10⁻¹⁰ cm³ (STP) / cm·s cm Hg] : | 110 |
| Harz E | Edukte : | Glycerin-1.3-dimethacrylat | 1 mol |
| | | Isocyanatopropyltriethoxysilan | 1 mol |
| | | Dimethyldiethoxysilan | 10 mol |
| | O₂-Permeabilität | [10⁻¹⁰ cm³ (STP) / cm·s cm Hg] : | 140 |

Die Integration von Dimethylsiloxan-Strukturen durch Co-Kondensation des Precursors mit Dimethyldiethoxysilan ist in weiten Bereichen varriierbar. Der daraus resultierende Variationsbereich der Sauerstoff-Permeation beträgt drei Größenordriungen.

### Synthese von Harz C :

Zur Vorlage von 66.4 g (0.29 mol Glycerin-1.3-dimethacrylat und Dibutylzinndilaurat (als Additionskatalysator) werden unter Kühlung 72.0 g (0.29 mol) 3-Isocyanatopropyltriethoxysilan zugetropft. Nach 21 h Rühren werden 290 ml Essigester, 258.9 g (1.75 mol) Dimethyldiethoxysilan und 63. 3 g Wasser (incl. Katalysator) zugesetzt. Nach 6 d Rühren wird mit Wasser ausgeschüttelt, filtriert, einrotiert und die flüchtigen Bestandteile an der Ölpumpe vollständig entfernt. Feststoffgehalt: 95.6 %, Viskosität nach 1 h: 2.2 Pas (25 °C).
Die Synthese der Harz-Varianten A, B, D und E erfolgt ganz analog.

### Beispiel 8

Einbau von Dimethylsiloxan-Strukturen durch Addition über Amino-Endgruppen:

| | | | |
|---|---|---|---|
| Harz A | Edukte : | Harzsystem aus Beispiel 2 | 1 mol |
| | | DMS A 21 | 0.03 mol |
| | O₂-Permeabilität | [10⁻¹⁰ cm³ (STP) / cm·s cm Hg] : | 19 |
| Harz B | Edukte : | Harzsystem aus Beispiel 2 | 1 mol |
| | | DMS A 21 | 0.09 mol |
| | O₂-Permeabilität | [10⁻¹⁰ cm³ (STP) / cm·s cm Hg] : | 160 |
| | E-Modul [MPa] | | 210 |
| | Biegefestigkeit [MPa] | | 25 |

Amino terminiertes Polydimethylsiloxan DMS A 21 (Gelest) wird durch Reaktion der Amino-Gruppen mit den Acrylat-Gruppen des Systems von Beispiel 2 addiert. Das Lösungsmittel n-Butylacetat wurde nach Aushärtung quantitativ entfernt.

### Beispiel 9

### Einbau von Dimethylsiloxan-Strukturen durch Co-Polymerisation von Acryloxy terminiertem Polydimethylsiloxan PDMS U22 (ABCR)

Das relativ kurzkettige, ca. 14 Polydimethylsiloxan-Einheiten enthaltende PDMS U22 der Firma ABCR ist in jedem Mischungsverhältnis z. B. mit System aus Beispiel 1 mischbar. Dieses System blieb bis zu einem Molverhältnis von ca. 8 :1 zu Hohlfasern spinnbar.

| | | |
|---|---|---|
| Edukte : | System aus Beispiel 1 | 8 mol |
| | Acryloxy-terminiertes Polydimethylsiloxan PDMS U22 | 1 mol |

entsprechend 1.5 DMS-Einheiten pro Basiseinheit.

### Beispiel 10

### Erzeugung von Porositäten in Hohlfasern

Die Zweiteilung des organischen Aushärtungsvorgangs bei der Hohlfaser-Herstellung in eine zunächst unvollständige, nur formkonservierende Vorhärtung unmittelbar unterhalb des Spinndüsenausgangs und die anschließende vollständige Durchhärtung in einem UV-Rundstrahler bietet eine Möglichkeit der Porenerzeugung in UV-härtenden, lösungsmittelhaltigen Systemen.
Das System aus Beispiel 1 wurde mit 20 % Lösungsmittel (Essigester) verdünnt, ohne nachteiligen Einfluss auf die Spinnbarkeit. Nach Zugabe von 2 % des UV-Starters Irgacure 184 wurde das System nach dem beschriebenen Verfahren zu einem Hohlfaden extrudiert (Spinnparameter: Spinndruck = 8 bar, Spinnfadentemperatur = 5 °C, Abzugsgeschwindigkeit = 0.8 m/s). Nach der Vorhärtung durch einen UV-Strahler geringer Leistung (Blue Point II, Fa. Hönle) ca. 5 mm unterhalb der Spinndüse ist die Hohlfaser noch klebrig, aber bereits formstabil. Durch Erhitzung mit einem IR-Strahler wird das Lösungsmittel herausgetrieben, bevor es im UV-Rundstrahler vollständig ausgehärtet wird. Das Ergebnis ist eine poröse Hohlfaser.

### Beispiel 11

### Erzeugung einer mikroporösen, silicatischen Hohlfaser

Im Material der erfindungsgemäßen Membranen sind auf molekularer Ebene anorganische Si-O-Si-Einheiten mit organisch polymerisierten Kohlenstoff-Einheiten kombiniert. Nach der Entfernung des organischen Anteils, z.B. aus einer anorganisch hochvernetzten erfindungsgemäßen Hohlfaser durch Pyrolyse und Oxidation, wird eine mikroporöse Hohlfaser mit einer engen Porenradienverteilung erhalten.

| | | |
|---|---|---|
| Edukte : | Glycerin-1.3dimethacrylat | 1 mol |
| | 3-Isocyanatopropyltriethoxysilan | 1 mol |
| | Tetraethoxysilan (TEOS) | 0.5 mol |

Das mit TEOS modifizierte Harzsystem wurde nach dem beschriebenen Verfahren zu Hohlfasern verarbeitet.

| | | |
|---|---|---|
| Spinnparameter : | Spinndruck | 18 bar |
| | Spinnfadentemperatur | 45 °C |
| | Abzugsgeschwindigkeit | 0.3 m/s |

Es wurden Hohlfasern von 231 µm Außendurchmesser und 36 µm Wandstärke erhalten. Diese Hohlfasern wurden in einem Röhrenofen durch langsames Erhitzen auf 650 °C zunächst in Stickstoff-Atmosphäre vorpyrolysiert, dann abgekühlt und durch erneutes Erhitzen auf 650 °C in Luft vollständig oxidiert. Das Ergebnis waren Hohlfaserstrukturen von 126 µm Außendurchmesser und 20 µm Wandstärke. Die Porositätsbestimmung über Stickstoff-Adsorption ergab eine BET-Oberfläche von 300 bis 800 m²/g und die Mikroporenanalyse einen mittleren Porenradius von < 1 nm.

## Patentansprüche

1. Verfahren zur Herstellung einer semipermeablen Membran mit folgenden Merkmalen:
• man verarbeitet eine gering viskose bis harzartige Flüssigkeit nach üblichen Methoden zu einer Membran;
• man trocknet gegebenenfalls die Membran;
• man härtet die gegebenenfalls getrocknete Membran thermisch und/oder strahlungsinduziert und/oder chemisch induziert durch Ausbildung eines organischen Netzwerkes;
• man fertigt die gering viskose bis harzartige Flüssigkeit
a) durch hydrolytische Polykondensation
■ einer oder mehrerer Verbindungen der allgemeinen Formel I, 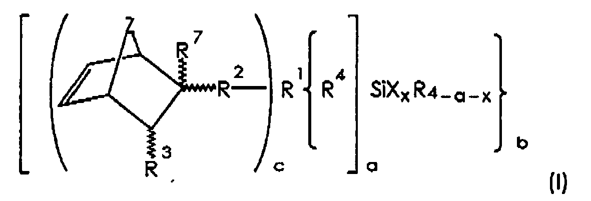 in der die Reste und Indices folgende Bedeutung haben:
R = Alkyl, Alkenyl, Aryl, Alkylaryl oder Arylalkyl mit jeweils 1 bis 15 Kohlen- stoff-Atomen, wobei diese Reste Sauerstoff- und/oder Schwefel-Ato- me und/oder Ester- und/oder Carbonyl- und/oder Carboxyl- und/ oder Amid- und/oder Amino-Gruppen enthalten können,
R¹ = Alkylen, Arylen, Arylenalkylen oder Arylenalkylen mit jeweils 0 bis 15 Kohlenstoff-Atomen, wobei diese Reste Sauerstoff- und/oder Schwe- fel-Atome und/oder Ester- und/oder Carbonyl- und/oder Carboxyl- und/oder Amid- und/oder Amino-Gruppen enthalten können,
R² = Alkylen, Arylen, Arylenalkylen oder Arylenalkylen mit jeweils 0 bis 15 Kohlenstoff-Atomen, wobei diese Reste Sauerstoff- und/oder Schwe- fel-Atome und/oder Ester- und/oder Carbonyl- und/oder Carboxyl- und/oder Amid- und/oder Amino-Gruppen enthalten können,
R³ = Wasserstoff, R²-R¹-R⁴-SiXₓR₃₋ₓ, Carboxyl-, Alkyl, Alkenyl, Aryl, Alkylaryl oder Arylalkyl mit jeweils 1 bis 15 Kohlenstoff-Atomen, wobei diese Reste Sauerstoff- und/oder Schwefel-Atome und/oder Ester- und/ oder Carbonyl- und/oder Carboxyl- und/oder Amid- und/oder Amino-Gruppen enthalten können,
R⁴ = -(CHR⁶-CHR⁶)ₙ-, mit n = 0 oder 1, -CHR⁶-CHR⁶-S-R⁵-, -CO-S-R⁵-, -CHR⁶-CHR⁶-NR⁶-R⁵-, -Y-CS-NH-R⁵-, -S-R⁵,-Y-CO-NH-R⁵-, -CO-O-R⁵-, -Y-CO-C₂H₃(COOH)-R⁵-, -Y-CO-C₂H₃(OH)-R⁵- oder -CO-NR⁶-R⁵-,
R⁵ = Alkylen, Arylen, Arylenalkylen oder Arylenalkylen mit jeweils 1 bis 15 Kohlenstoff-Atomen, wobei diese Reste Sauerstoff- und/oder Schwe- fel-Atome und/oder Ester- und/oder Carbonyl- und/oder Carboxyl- und/oder Amid- und/oder Amino-Gruppen enthalten können,
R⁶ = Wasserstoff, Alkyl oder Aryl mit 1 bis 10 Kohlenstoff-Atomen.
R⁷ = Wasserstoff, Alkyl, Alkenyl, Aryl, Alkylaryl oder Arylalkyl mit jeweils 1 bis 15 Kohlenstoff-Atomen, wobei diese Reste Sauerstoff- und/oder Schwefel-Atome und/oder Ester- und/oder Carbonyl- und/oder Carboxyl- und/oder Amid- und/oder Amino-Gruppen enthalten kön- nen,
X = Wasserstoff, Halogen, Hydroxy, Alkoxy, Acyloxy, Alkylcarbonyl, Alk- oxycarbonyl oder NR"₂, mit R" = Wasserstoff, Alkyl oder Aryl,
Y = -O-, -S- oder -NR⁶-,
Z = -O- oder =(CHR⁶)ₘ-, mit m = 1 oder 2,
a = 1, 2 oder 3, mit b = 1 für a = 2 oder 3,
b = 1, 2 oder 3, mit a = 1 für b = 2 oder 3,
c = 1 bis 6,
x = 1, 2 oder 3, mit a+x = 2, 3 oder 4,
und/oder
■ einer oder mehrerer Verbindungen der allgemeinen Formel II, 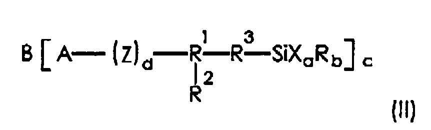 in der die Reste und Indices folgende Bedeutung haben:
B = ein einer geradkettiger oder verzweigter organischer Rest mit mindestens C=C-Doppelbindung und 4 bis 50 Kohlenstoff-Atomen,
R = Alkyl, stoff-Atomen, me oder Alkenyl, Aryl, Alkylaryl oder Arylalkyl mit jeweils 1 bis 15 Kohlen- wobei diese Reste Sauerstoff- und/oder Schwefel-Ato- und/oder Ester- und/oder Carbonyl- und/oder Carboxyl- und/ Amid- und/oder Amino-Gruppen enthalten können,
R³ = Alkylen, durch chen Arylen, Arylenalkylen oder Alkylenarylen mit jeweils 0 bis 10 Kohlenstoff-Atomen, wobei diese Reste durch Sauerstoff- und/oder Schwefel-Atome und/oder durch Amino-Gruppen unterbro- sein können,
X = Wasserstoff, Halogen, Hydroxy, Alkoxy, Acyloxy, Alkylcarbonyl, Alk- oxycarbonyl oder NR"₂,
mit R"= Wasserstoff, Alkyl, Aryl oder Alkylaryl,
A = O, S oder NH
für d = 1 und Z = CO und
R¹ = Alkylen, Arylen oder Alkylenarylen mit jeweils 1 bis 10 Kohlen- stoff-Atomen, wobei diese Reste durch Sauerstoff- und/oder durch Schwefel-Atome und/oder durch Amino-Gruppen un- terbrochen sein können, und
R² = COOH oder H,
oder
A = O, S, NH oder COO
für d = 1 und Z = CHR', mit R' = H, Alkyl, Aryl oder Alkylaryl, und
R¹ = Alkylen, Arylen oder Alkylenarylen mit jeweils 1 bis 10 Kohlen- stoff-Atomen, wobei diese Reste durch Sauerstoff- und/oder durch Schwefel-Atome und/oder durch Amino-Gruppen un- terbrochen sein können, und
R² = OH,
oder
A = O, S, N H oder COO
für d = 0 und
R¹ = Alkylen, Arylen oder Alkylenarylen mit jeweils 1 bis 10 Kohlen- stoff-Atomen, wobei diese Reste durch Sauerstoff- und/oder durch Schwefel-Atome und/oder durch Amino-Gruppen un- terbrochen sein können, und
R² = OH,
oder
A = S
für d = 1 und Z = CO und
R¹ = N und
R² = H,
a = 1, 2 oder 3,
b = Q, 1 oder 2, mit a+b = 3,
c = 1, 2, 3 oder 4,
und/oder
■ einer oder mehrerer Verbindungen der allgemeinen Formel III,
{XₐR_{b}Si[(R'A)_{c}]_{(4-a-b)}}ₓB (III)
in der die Reste und Indices folgende Bedeutung haben:
A = O, S, PR", POR", NHC(O)O oder NHC(O)NR",
B = geradkettiger oder verzweigter organischer Rest, der sich von einer Verbindung B' mit mindestens einer (für c = 1 und A = NHC(O)O oder NHC(O)NR") bzw. mindestens zwei C=C-Doppelbindungen und 5 bis 50 Kohlenstoff-Atomen ableitet,
R = Alkyl, Alkenyl, Aryl, Alkylaryl oder Arylalkyl mit jeweils 1 bis 15 Kohlen- stoff-Atomen, wobei diese Reste Sauerstoff- und/oder Schwefel-Ato- me, und/oder Ester- und/oder Carbonyl- und/oder Carboxyl- und/ oder Amid- und/oder Amino-Gruppen enthalten können,
R' = Alkylen, Arylen oder Alkylenarylen,
R" = Wasserstoff, Alkyl, Aryl oder Alkylaryl,
X = Wasserstoff, Halogen, Hydroxy, Alkoxy, Acyloxy, Alkylcarbonyl, Alk- oxycarbonyl oder NR"₂,
a = 1, 2 oder 3,
b = 0, 1 oder 2,
c = 0 oder 1,
x = eine ganze Zahl, deren Maximalwert der Anzahl von Doppelbindun- gen in der Verbindung B' minus 1 entspricht, bzw. gleich der Anzahl von Doppelbindungen in der Verbindung B' ist, wenn c = 1 und A für NHC(O)O oder NHC(O)NR" steht,
wobei die obigen Alkyl- bzw. Alkenyl-Reste gegebenenfalls substituierte geradkettige, verzweigte oder cyclische Reste mit 1 bzw. 2 bis 20 Kohlenstoff-Atomen sind, Aryl für gegebenenfalls substituiertes Phenyl, Naphthyl oder Biphenyl steht und sich die obigen Alkoxy-, Acyloxy-, Alkylcarbonyl-, Alkoxycarbonyl-, Alkylaryl-, Arylalkyl-, Arylen-, Alkylen- und Alkylenaryl-Reste von den oben definierten Alkyl- und Aryl-Resten ableiten,
und/oder
■ einer oder mehrerer Verbindungen der allgemeinen Formel IV,
YₐSiXₓR₄₋ₐ₋ₓ (IV)
in der die Reste und Indices folgende Bedeutung haben:
R = Alkyl, Alkenyl, Aryl, Alkylaryl oder Arylalkyl mit jeweils 1 bis 15 Kohlen- stoff-Atomen, wobei diese Reste Sauerstoff- und/oder Schwefel-Ato- me und/oder Ester- und/oder Carbonyl- und/oder Corboxyl- und/ oder Amid- und/oder Amino-Gruppen enthalten können,
X = Wasserstoff, Halogen, Hydroxy, Alkoxy, Acyloxy, Alkylcarbonyl, Alk- oxycarbonyl oder NR"₂, mit R" = Wasserstoff, Alkyl, Aryl oder Alkylaryl,
Y = organischer Rest mit 1 bis 30, bevorzugt mit 1 bis 20 Kohlenstoff-Ato- men, und mit 1 bis 5, bevorzugt mit 1 bis 4 Mercapto-Gruppen,
a = 1, 2 oder 3,
x = 1, 2 oder 3, mit a+x = 2, 3 oder 4,
und/oder
■ von den Verbindungen der Formeln I bis IV abgeleiteten Vorkondensaten
und gegebenenfalls
■ einer oder mehrerer Verbindungen der allgemeinen Formel V,
XₐSiR₄₋ₐ (V)
in der die Reste und Indices folgende Bedeutung haben:
R = Alkyl, Alkenyl, Aryl, Alkylaryl oder Arylalkyl mit jeweils 1 bis 15 Kohlen- stoff-Atomen, wobei diese Reste Sauerstoff- und/oder Schwefel-Ato- me und/oder Ester- und/oder Carbonyl- und/oder Carboxyl- und/ oder Amid- und/oder Amino-Gruppen enthalten können,
X = Wasserstoff, Halogen, Hydroxy, Alkoxy, Acyloxy, Alkylcarbonyl, Alk- oxycarbonyl oder NR"₂, mit R" = Wasserstoff, Alkyl, Aryl oder Alkylaryl,
a = 1, 2 oder 3,
und/oder von diesen abgeleiteten Vorkondensaten,
wobei man die hydrolytische Polykondensation durch Zugabe von Wasser oder Feuchtigkeit und gegebenenfalls in Anwesenheit eines Lösungsmittels und/ oder eines Kondensationskatalysators durchführt, und wobei man, bezogen auf die Monomeren, das molare Verhältnis der Summe der Verbindungen der Formeln I, II, III und IV zu Verbindungen der Formel V zwischen 1:0 und 1: 20 wählt,
und gegebenenfalls
b) durch Zugabe
■ eines oder mehrerer copolymerisierbarer und/oder (poly)addierbarer Monomere und/oder Oligomere,
■ und/oder eines oder mehrerer Härtungskatalysatoren,
■ und/oder eines oder mehrerer Poren erzeugender Additive.

2. Verfahren nach Anspruch 1, **dadurch gekennzeichnet, dass** man die Flüssigkeit zu Flachmembranen oder zu rohrförmigen Membranen verarbeitet.

3. Verfahren nach Anspruch 1 oder 2, **dadurch gekennzeichnet, dass** man die Membran auf einem Träger fertigt.

4. Verfahren nach einem oder mehreren der Ansprüche 1 bis 3, **dadurch gekennzeichnet, dass** man eine Flüssigkeit verwendet, die Polykondensate enthält, die sich von einer oder mehreren Verbindungen der Formel I ableiten, in der die Indices a und/oder b und/oder c den Wert = 1 haben.

5. Verfahren nach einem oder mehreren der Ansprüche 1 bis 4, **dadurch gekennzeichnet, dass** man eine Flüssigkeit verwendet, die Polykondensate enthält, die sich von einer oder mehreren Verbindungen der Formeln II und/oder lll ableiten, in denen der Rest B eine oder mehrere Acrylat- und/ oder Methacrylat-Gruppen enthält.

6. Verfahren nach einem oder mehreren der Ansprüche 1 bis 5, **dadurch gekennzeichnet, dass** man eine Flüssigkeit verwendet, die Polykondensate enthält, die sich von einer oder mehreren Verbindungen der Formel IV' ableiten,
[(HS-R⁵)ₙR⁶-S-E-R⁵]ₐSiXₓR₄₋ₐ₋ₓ (IV')
in der die Reste und Indices folgende Bedeutung haben:
E = -CO-NH-, -CS-NH-, -CH₂-CH₂- oder -CH₂-CH(OH)-
R = wie in Anspruch 1 definiert;
R⁵ = Alkylen, Arylen, Arylenalkylen oder Arylenalkylen mit jeweils 1 bis 15 Koh- lenstoff-Atomen, wobei diese Reste durch Sauerstoff- und/oder durch Schwefel-Atome und/oder durch Ester- und/oder durch Carbonyl- und/
R⁶ = oder durch Carboxyl- und/oder durch Amid- und/oder durch Amino- Gruppen unterbrochen sein können; Alkylen, Arylen, Arylenalkylen oder Arylenalkylen mit jeweils 1 bis 15 Koh- lenstoff-Atomen, wobei diese Reste durch Sauerstoff- und/oder durch Schwefel-Atome und/oder durch Ester- und/oder durch Carbonyl- und/ oder durch Carboxyl- und/oder durch Amid- und/oder durch Amino- Gruppen unterbrochen sein können;
X = wie in Anspruch 1 definiert;
a = wie in Anspruch 1 definiert;
n = 2, 3, 4 oder 5;
x = wie in Anspruch 1 definiert;

7. Verfahren nach einem oder mehreren der Ansprüche 1 bis 6, **dadurch gekennzeichnet, dass** man eine Flüssigkeit verwendet, die eine oder mehrere organische Verbindungen mit einer oder mehreren Mercapto-Gruppen enthält.

8. Verfahren nach einem oder mehreren der Ansprüche 1 bis 7, **dadurch gekennzeichnet, dass** man eine Flüssigkeit verwendet, die eine oder mehrere organische Verbindungen mit einer oder mehreren C=C-Doppelbindungen enthält.

9. Verfahren nach Anspruch 8, **dadurch gekennzeichnet, dass** man eine Flüssigkeit verwendet, die Polykondensate und/oder Oligokondensate enthält, die eine oder mehrere C=C-Doppelbindungen aufweisen und die sich von organisch modifizierten, hydrolytisch kondensierbaren Silanen ableiten.

10. Verfahren nach einem oder mehreren der Ansprüche 1 bis 9, **dadurch gekennzeichnet, dass** man eine Flüssigkeit verwendet, die eine oder mehrere organische Verbindungen mit einer oder mehreren substituierten und/oder unsubstituierten Amino-Gruppen enthält.

11. Verfahren nach Anspruch 10, **dadurch gekennzeichnet, dass** man eine Flüssigkeit verwendet, die Polykondensate und/oder Oligokondensate enthält, die eine oder mehrere substituierte und/oder unsubstituierte Amino-Gruppen aufweisen und die sich von organisch modifizierten, hydrolytisch kondensierbaren Silanen ableiten.

12. Verfahren nach einem oder mehreren der Ansprüche 1 bis 11, **dadurch gekennzeichnet, dass** man eine Flüssigkeit verwendet, die als Poren erzeugende Additive eines oder mehrere Salze und/oder eine oder mehrere Flüssigkeiten und/oder eines oder mehrere Treibmittel und/oder einen oder mehrere poröse Füllstoffe enthält.

13. Verfahren nach Anspruch 12, **dadurch gekennzeichnet, dass** man nach der Härtung die Poren erzeugenden Additive aus der Membran herauslöst und/oder durch thermische Behandlung entfernt.

14. Verfahren nach einem oder mehreren der Ansprüche 1 bis 13, **dadurch gekennzeichnet, dass** man nach der Härtung die organischen Komponenten durch thermisches Cracken entfernt.

15. Semipermeable Membran erhältlich durch ein Hersteliungsverfahren nach einem oder mehreren der Ansprüche 1 bis 14.

16. Verwendung der semipermeablen Membran nach Anspruch 15 für Trennprozesse, insbesondere für die Gasseparation, für die Umkehrosmose, für die Elektrodialyse, für die Dialyse, für die Pervaporation, für die Mikro-, Ultra- und Hyperfiltration.

## Claims

1. Method for the production of a semipermeable membrane having the following features:
• a low-viscous to resin-like liquid is processed according to normal methods to form a membrane;
• the membrane is possibly dried;
• the possibly dried membrane is cured thermally and/or in a radiation-induced and/or chemically-induced manner by forming an organic network;
• the low viscous to resin-like liquid is manufactured
a) by hydrolytic polycondensation
■ of one or more compounds of the general formula 1, 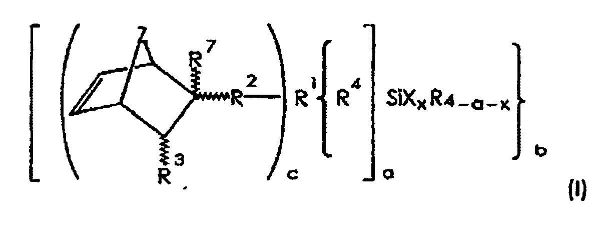 in which the radicals and indices have the following meaning:
R = alkyl, alkenyl, aryl, alkylaryl or arylalkyl with respectively 1 to 15 carbon atoms, these radicals being able to comprise oxygen-- and/or sulphur atoms and/or ester and/or carbonyl and/or carboxyl and/or amide and/or amino groups,
R¹ = alkylene, arylene, arylenealkylene or arylenealkylene with respectively 0 to 15 carbon atoms, these radicals being able to comprise oxygen- and/or sulphur atoms and/or ester and/or carbonyl and/or carboxyl and/or amide and/or amino groups,
R² = alkylene, arylene, arylenealkylene or arylenealkylene with respectively 0 to 15 carbon atoms, these radicals being able to comprise oxygen- and/or sulphur atoms and/or ester and/or carbonyl and/or carboxyl and/or amide and/or amino groups,
R³ = hydrogen, R²-R¹-R⁴-SCiₓR₃₋ₓ, carboxyl, alkyl, alkenyl, aryl, alkylaryl or arylalkyl with respectively 1 to 15 carbon atoms, these radicals being able to comprise oxygen- and/or sulphur atoms and/or ester and/or carbonyl and/or carboxyl and/or amide and/or and/or amino groups,
R⁴ = -(CHR⁶-CHR⁶)ₙ-, with n = 0 or 1, -CHR⁶-CHR⁶- S-R⁵-, -CO-S-R⁵-, -CHR⁶-CHR⁶-NR⁶-R⁵-, -Y-CS- NH-R⁵-, -S-R⁵, -Y-CO-NH-R⁵, -CO-O-R⁵-, -Y- CO-C₂H₃(COOH)-R⁵-, -Y-CO-C₂H₃(OH)-R⁵- or -CO-NR⁶-R⁵-,
R⁵ = alkylene, arylene, arylenealkyklene or arylenealkylene with respectively 1 to 15 carbon atoms, these radicals being able to comprise oxygen- and/or sulphur atoms and/or ester and/or carbonyl and/or carboxyl and/or amide and/or amino groups,
R⁶ = hydrogen, alkyl or aryl with 1 to 10 carbon atoms,
R⁷ = hydrogen, alkyl, alkenyl, aryl, alkylaryl or arylalkyl with respectively 1 to 15 carbon atoms, these radicals being able to comprise oxygen- and/or sulphur atoms and/or ester and/or carbonyl and/or carboxyl and/or amide and/or amino groups,
X = hydrogen, halogen, hydroxy, alkoxy, acyloxy, alkylcarbonyl, alkoxycarbonyl or NR"₂, with R" = hydrogen, alkyl or aryl,
Y = -O-, -S- or -NR⁶-,
Z = -O- or -(CHR⁶)ₘ-, with m = 1 or 2,
a = 1, 2 or 3, with b = 1 for a = 2 or 3,
b = 1, 2 or 3, with a = 1 for b = 2 or 3,
c = 1 to 6,
x = 1, 2 or 3, with a + x = 2, 3 or 4,
and/or
■ one or more compounds of the general formula II, 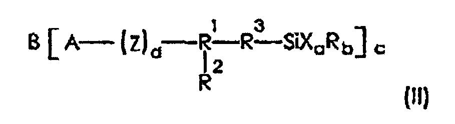 in which the radicals and indices have the following meaning:
B = a straight-chain or branched organic radical with at least one C=C double bond and 4 to 50 carbon atoms,
R = alkyl, alkenyl, aryl, alkylaryl or arylalkyl with respectively 1 to 15 carbon atoms, these radicals being able to comprise oxygen- and/or sulphur atoms and/or ester and/or carbonyl and/or carboxyl and/or amide and/or amino groups,
R³ = alkylene, arylene, arylenealkylene or alkylenearylene with respectively 0 to 10 carbon atoms, these radicals being able to be interrupted by oxygen- and/or by sulphur atoms and/or by amino groups,
X = hydrogen, halogen, hydroxy, alkoxy, acyloxy, alkylcarbonyl, alkoxycarbonyl or NR"₂, with R" = hydrogen, alkyl, aryl or alkylaryl,
A = O, S or NH, for d = 1 and Z = CO and
R¹ = alkylene, arylene or alkylenearylene with respectively 1 to 10 carbon atoms, these radicals being able to be interrupted by oxygen- and/or by sulphur atoms and/or by amino groups, and
R² = COOH or H,
or
A = O, S, NH or COO
for d = 1 and Z = CHR', with R' = H, alkyl, aryl or alkylaryl, and
R¹ = alkylene, arylene or alkylenearylene with respectively 1 to 10 carbon atoms, these radicals being able to be interrupted by oxygen- and/or by sulphur atoms and/or by amino groups, and
R² = OH,
or
A = O, S, NH or COO
for d = 0 and
R¹ = alkylene, arylene or alkylenearylene with respectively 1 to 10 carbon atoms, these radicals being able to be interrupted by oxygen- and/or by sulphur atoms and/or by amino groups, and
R2 = OH,
or
A = S
for d = 1 and Z = CO and
R¹ = N and
R² = H,
a = 1, 2 or 3,
b = 0, 1 or 2, with a + b = 3,
c = 1, 2, 3 or 4,
and/or
■ one or more compounds of the general formula III,
{XₐR_{b}Si[(R'A)_{c}]_{(4-a-b)}}ₓB (III)
in which the radicals and indices have the following meaning:
A = O, S, PR", POR", NHC(O)O or NHC(O)NR",
B = a straight-chain or branched organic radical which is derived from a compound B' with at least one (for c = 1 and A = NHC(O)O or NHC(O)NR") or at least two C=C double bonds and 5 to 50 carbon atoms,
R = alkyl, alkenyl, aryl, alkylaryl or arylalkyl with respectively 1 to 15 carbon atoms, these radicals being able to comprise oxygen- and/or sulphur atoms, and/or ester and/or carbonyl and/or carboxyl and/or amide and/or amino groups,
R' = alkylene, arylene or alkylenearylene,
R" = hydrogen, alkyl, aryl or alkylaryl,
X = hydrogen, halogen, hydroxy, alkoxy, acyloxy, alkylcarbonyl, alkoxycarbonyl or NR"₂,
a = 1, 2 or 3,
b = 0, 1 or 2,
c = 0 or 1,
x = a whole number, the maximum value of which corresponds to the number of double bonds in the compound B' minus 1, or equal to the number of double bonds in the compound B' if c = 1 and A stands for NHC(O)O or NHC(O)NR",
the above alkyl or alkenyl radicals being possibly substituted straight-chain, branched or cyclic radicals with 1 or 2 to 20 carbon atoms, aryl standing for possibly substituted phenyl, naphthyl or biphenyl and the above alkoxy, acyloxy, alkylcarbonyl, alkoxycarbonyl, alkylaryl, arylalkyl, arylene, alkylene and alkylenearyl radicals being derived from the above-defined alkyl and aryl radicals,
and/or
■ one or more compounds of the general formula IV,
YₐSiXₓR₄₋ₐ₋ₓ (IV)
in which the radicals and indices have the following meaning:
R³ = alkyl, alkenyl, aryl, alkylaryl or arylalkyl with respectively 1 to 15 carbon atoms, these radicals being able to comprise oxygen- and/or sulphur atoms and/or ester and/or carbonyl and/or carboxyl and/or amide and/or amino groups,
X = hydrogen, halogen, hydroxy, alkoxy, acyloxy, alkylcarbonyl, alkoxycarbonyl or NR"₂, with R" = hydrogen, alkyl, aryl or alkylaryl,
Y = an organic radical with 1 to 30, preferably with 1 to 20 carbon atoms, and with 1 to 5, preferably with 1 to 4, mercapto groups,
a = 1, 2 or 3,
x = 1, 2 or 3, with a + x = 2, 3 or 4,
and/or
■ precondensates derived from the compounds of formulae I to IV
and possibly
■ one or more compounds of the general formula V,
XₐSiR₄₋ₐ (V)
in which the radicals and indices have the following meaning:
R³ = alkyl, alkenyl, aryl, alkylaryl or arylalkyl with respectively 1 to 15 carbon atoms, these radicals being able to comprise oxygen- and/or sulphur atoms and/or ester and/or carbonyl and/or carboxyl and/or amide and/or amino groups,
X = hydrogen, halogen, hydroxy, alkoxy, acyloxy, alkylcarbonyl, alkoxycarbonyl or NR"₂, with R" = hydrogen, alkyl, aryl or alkylaryl,
a = 1, 2 or 3,
and/or precondensates derived from the latter,
the hydrolytic polycondensation being implemented by the addition of water or moisture and possibly in the presence of a solvent and/or a condensation catalyst, and the molar ratio, relative to the monomers, of the sum of the compounds of formulae I, II, III and IV to the compounds of formula V being chosen between 1 : 0 and 1 : 20,
and possibly
b) by the addition
■ of one or more copolymerisable and/or (poly)addable monomers and/or oligomers,
■ and/or of one or more curing catalysts,
■ and/or of one or more pore-producing additives.

2. Method according to claim 1, **characterised in that** the liquid is processed to form planar membranes or to form tubular membranes.

3. Method according to claim 1 or 2, **characterised in that** the membrane is manufactured on a carrier.

4. Method according to one or more of the claims 1 to 3, **characterised in that** a liquid is used which comprises polycondensates which are derived from one or more compounds of formula I in which the indices a and/or b and/or c have the value = 1.

5. Method according to one or more of the claims 1 to 4, **characterised in that** a liquid is used which comprises polycondensates which are derived from one or more compounds of formulae II and/or III in which the radical B comprises one or more acrylate and/or methacrylate groups.

6. Method according to one or more of the claims 1 to 5, **characterised in that** a liquid is used which comprises polycondensates which are derived from one or more compounds of formula IV',
[(HS-R⁵)ₙR⁶-S-E-R⁵]ₐSiXₓR₄₋ₐ₋ₓ (IV')
in which the radicals and indices have the following meaning:
E = -CO-NH-, -CS-NH-, -CH₂-CH₂- or -CH₂-CH(OH)-
R = as defined in claim 1;
R⁵ = alkylene, arylene, arylenealkyklene or arylenealkylene with respectively 1 to 15 carbon atoms, these radicals being able to be interrupted by oxygen- and/or by sulphur atoms and/or by ester and/or by carbonyl or by carboxyl and/or by amide and/or by amino groups;
R⁶ = alkylene, arylene, arylenealkylene or arylenealkylene with respectively 1 to 15 carbon atoms, these radicals being able to be interrupted by oxygen- and/or by sulphur atoms and/or by ester and/or by carbonyl and/or by carboxyl and/or by amide and/or by amino groups;
X = as defined in claim 1;
a = as defined in claim 1;
n = 2, 3, 4 or 5;
x = as defined in claim 1.

7. Method according to one or more of the claims 1 to 6, **characterised in that** a liquid is used which comprises one or more organic compounds with one or more mercapto groups.

8. Method according to one or more of the claims 1 to 7, **characterised in that** a liquid is used which comprises one or more organic compounds with one or more C=C double bonds.

9. Method according to claim 8, **characterised in that** a liquid is used which comprises polycondensates and/or oligocondensates which have one or more C=C double bonds and which are derived from organically modified, hydrolytically condensable silanes.

10. Method according to one or more of the claims 1 to 9, **characterised in that** a liquid is used which comprises one or more organic compounds with one or more substituted and/or unsubstituted amino groups.

11. Method according to claim 10, **characterised in that** a liquid is used which comprises polycondensates and/or oligocondensates which have one or more substituted and/or unsubstituted amino groups and which are derived from organically modified, hydrolytically condensable silanes.

12. Method according to one or more of the claims 1 to 11, **characterised in that** a liquid is used which comprises, as pore-producing additives, one or more salts and/or one or more liquids and/or one or more propellants and/or one or more porous fillers.

13. Method according to claim 12, **characterised in that**, after curing, the pore-producing additives are dissolved out of the membrane and/or are removed by thermal treatment.

14. Method according to one or more of the claims 1 to 13, **characterised in that**, after curing, the organic components are removed by thermal cracking.

15. Semipermeable membrane obtainable by a production method according to one or more of the claims 1 to 14.

16. Use of the semipermeable membrane according to claim 15 for separation processes, in particular for gas separation, for reverse osmosis, for electrodialysis, for dialysis, for pervaporation, for micro-, ultra- and hyperfiltration.

## Revendications

1. Procédé d'obtention d'une membrane semi-perméable comportant les étapes suivantes :
- on traite un liquide faiblement visqueux à résineux par des méthodes connues pour obtenir une membrane ;
- on sèche le cas échéant la membrane ;
- on durcit la membrane le cas échéant séchée thermiquement et/ou sous l'action d'un rayonnement et/ou par voie chimique en formant un réseau organique
- on finit le liquide faiblement visqueux à résineux
a) par polycondensation hydrolytique
- d'un ou de plusieurs composé(s) répondant à la formule générale 1 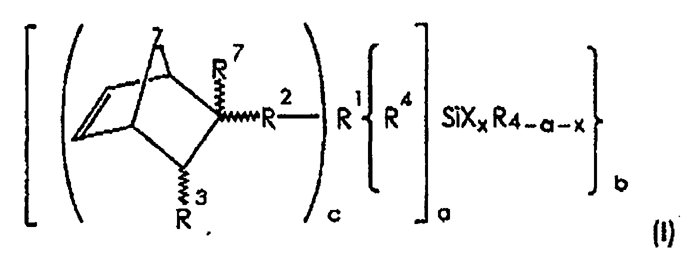 dans laquelle les restes et indices ont la signification suivante :
R = Alkyle, alcenyle, aryle, alkyl aryle ou aryle alkyle avec à chaque fois 1 à 15 atomes de carbone, ces restes pouvant renfermer des atomes d'oxygène et/ou de soufre et/ou des groupes ester et/ou carbonyle et/ou carboxyle et/ou amide et/ou amino,
R¹ = Alkylene, arylene, arylene-alkylène ou arylene-alkylene avec à chaque fois 0 à 15 atomes de carbone, ces restes pouvant ren- fermer des atomes d'oxygène et/ou de soufre et/ou des groupes ester et/ou carbonyle et/ou carboxyle et/ou amide et/ou amino,
R² = Alkylene, arylene, arylène-alkylène ou arylene-alkylène avec à chaque fois 0 à 15 atomes de carbone, ces restes pouvant ren- fermer des atomes d'oxygène et/ou de soufre et/ou des groupes ester et/ou carbonyle et/ou carboxyle et/ou amide et/ou amino,
R3 = Hydrogène, R²-R¹-R⁴-SiXₓR₃₋ₓ, carboxyle, alkyl, alcenyle, Aryle, alkyl-aryl ou aryle-alkyle avec à chaque fois 1 à 15 atomes de carbone, ces restes pouvant renfermer des atomes d'oxygène et/ou de soufre et/ou des groupes ester et/ou carbonyle et/ou carboxyle et/ou amide et/ou amino,
R⁴ = -(CHR⁶-CHR⁶)ₙ-, avec n = 0 ou 1, -CHR⁶-CHR⁶-S-R⁵-, -CO-S- R⁵-, -CHR⁶CHR⁶-NR⁶R⁵-, -Y-CS-NH-R⁵-, -S-R⁵, -Y-CO-NH-R⁵-, -CO-O-R⁵-, -Y-CO-C₂H₃(COOH)-R⁵-, -Y-CO-C₂H₃(OH)-R⁵-ou -CO- NR⁶-R⁵-,
R⁵ = Alkylene, arylene, arylène-alkylène ou arylene-alkylene avec à chaque fois 1 à 15 atomes de carbone, ces restes pouvant ren- fermer des atomes d'oxygène et/ou de soufre et/ou des groupes ester et/ou carbonyle et/ou carboxyle et/ou amide et/ou amino,
R⁶ = Hydrogène, alkyle ou aryle avec 1 à 15 atomes de carbone.
R⁷ = Hydrogène, alkyle, alcényle, aryle, alkyle-aryle ou aryle-alkyle avec à chaque fois 1 à 15 atomes de carbone, ces restes pouvant renfermer des atomes d'oxygène et/ou de soufre et/ou des groupes ester et/ou carbonyle et/ou carboxyle et/ou amide et/ou amino,
X = Hydrogène, halogène, hydroxy, alcoxy, acyloxy, alkyl- carbonyle, alcoxy-carbonyle ou NR"₂, avec R" = hydrogène, alkyle ou aryle,
Y -O-, -S- ou -NR⁶-,
Z -O- ou -(CHR⁶)ₘ-, avec m = 1 ou 2,
a 1, 2 ou 3, avec b = 1 pour a = 2 ou 3
b 1, 2 ou 3, avec a = 1 pour b = 2 ou 3
c 1 à 6, x 1, 2 ou 3, avec a + x = 2, 3 ou 4
et/ou
- d'un ou de plusieurs composé(s) répondant à la formule générale II, 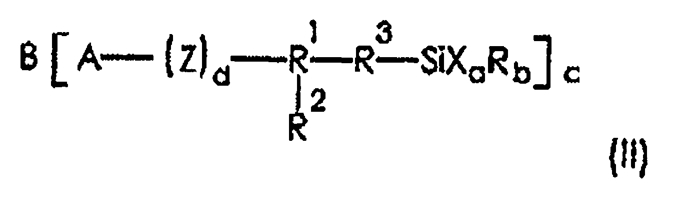 dans laquelle les restes et indices ont la signification suivante :
B = un reste organique à chaine droite ou ramifiée avec au moins une double liaison C = C et 4 à 50 atomes de carbones,
R = Alkyle, alcenyle, aryle, alkyl-aryle ou aryl-alkyle avec à chaque fois 1 à 15 atomes de carbone, ces restes pouvant renfermer des atomes d'oxygène et/ou de soufre et/ou des groupes ester et/ou carbonyle et/ou carboxyle et/ou amide et/ou amino,
R3 Alkylene, arylene, arylène-alkylène ou alkylene-arylene avec à chaque fois 0 à 10 atomes de carbone, ces restes pouvant être in- terrompu par des atomes d'oxygène et/ou de soufre et/ou par des groupes amino,
X Hydrogène, halogène, hydroxy, alcoxy, acyloxy, alkyl-carbonyle, alcoxy-carbonyle ou NR"₂,
avec R" = hydrogène, alkyle, aryle ou alkyl-aryle,
A O, S ou NH
pour d = 1 et Z = CO et
R¹ = Alkylene, arylène ou alkylene-arylene avec à chaque fois 1 à 10 atomes de carbone, ces restes pouvant être interrompus par des des atomes d'oxygène et/ou de soufre et/ou par des groupes amino, et
R² = COOH ou H,
ou
A O, S, NH ou COO
pour d = 1 et Z = CHR', avec R' = H, alkyle, aryle ou alkyl-aryle, et R¹ = Alkylene, arylène ou alkylene-arylene avec à chaque fois 1 à 10 atomes de carbone, ces restes pouvant être interrompus par des des atomes d'oxygène et/ou de soufre et/ou par des groupes amino, et
R² = OH,
ou
A O, S, NH ou COO
pour d = 0 et
R¹ = Alkylene, arylène ou alkylene-arylene avec à chaque fois 1 à 10 atomes de carbone, ces restes pouvant être interrompus par des des atomes d'oxygène et/ou de soufre et/ou par des groupes amino, et
R² = OH,
ou
A = S
pour d = 1 et Z = CO et
R¹ = N, et
R² = H
a = 1, 2 ou 3
b = 0, 1 ou 2 avec a + b = 3
c = 1, 2, 3 ou 4,
et/ou
- d'un ou de plusieurs composé(s) répondant à la formule générale III
{XₐR_{b}Si[(R'A)_{c}]_{(4-a-b)}}ₓB (III)
dans laquelle les restes et indices ont la signification suivantes :
A = O, S, PR", POR", NHC(O)O ou NHC (O)NR",
B = un reste organique à chaine droite ou ramifié qui dérive d'un composé B' avec au moins une (pour c = 1 et A = NHC(O)O ou NHC(O)NR") ou au moins deux double(s) liaisons C=C et 5 à 50 atomes de carbone,
R = Alkyle, alcényle, aryle, alkyl-aryle ou aryl-alkyle avec à chaque fois 1 à 15 atomes de carbone, ces restes pouvant renfermer des atomes d'oxygène et/ou de soufre et/ou des groupes ester et/ou carbonyle et/ou carboxyle et/ou amide et/ou amino,
R' = Alkylène, arylène ou alkylène-arylène,
R" = Hydrogène, alkyle, aryle ou alkylaryle,
X = Hydrogène, halogène, hydroxy, alcoxy, acyloxy, alkyl-carbonyle, alcoxy-carbonyle ou NR"₂,
a = 1, 2 ou 3
b = 0, 1 ou 2
c = 0 ou 1,
x = un nombre entier dont la valeur maximum correspond au nombre de doubles liaisons dans le composé B' moins 1, ou est similaire au nombre de double liaisons dans le composé B' lors- que c = 1 et A représente NHC(O)O ou NHC(O)NR',
les restes alkyle ou alcényle susmentionnés étant des restes à chaine droite ramifiés ou cycliques le cas échéant substitués ayant 1 ou 2 à 20 atomes de carbone, aryle représente des restes phényle, naphtyle ou bi phényle le cas échéant substitués, et les restes alkoxy, acyloxy, alkyle-carbonyle, alcoxy-carbonyle, alkyl-aryle, aryl-alkyle, arylène, alkylène et alkylenaryl susmentionnés dérivant des restes alkyle et aryle définis ci-dessus,
et/ou
- d'un ou de plusieurs composé(s) répondant à la formule générale IV
YₐSiXₓR₄₋ₐ₋ₓ (IV)
dans laquelle les restes et indices ont la signification suivantes :
R = Alkyle, alcényle, aryle, alkyl-aryle ou aryl-alkyle avec à chaque fois 1 à 15 atomes de carbone, ces restes pouvant renfermer des atomes d'oxygène et/ou de soufre et/ou des groupes ester et/ou carbonyle et/ ou carboxyle et/ ou amide et/ ou amino,
X = Hydrogène, halogène, hydroxy, alcoxy, acyloxy, alkyl-carbonyle, alcoxy-carbonyle ou NR"₂, avec R" = Hydrogène, alkyle, aryle ou alkyl-aryle,
Y = Restes organiques avec 1 à 30, de préférence 1 à 20 atomes de carbone et avec 1 à 5, de préférence 1 à 4 groupe mercapto,
a = 1, 2 ou 3,
x = 1, 2 ou 3 avec a + x = 2, 3 ou 4
et/ou
- des produits de précondensation dérivés de ces composés formules I à IV,
et le cas échéant
- d'un ou plusieurs composé(s) répondant à la formule générale V
XₐSiR₄₋ₐ (V)
dans laquelle les restes et indices ont la signification suivantes :
R = Alkyle, alcényle, aryle, alkyl-aryle ou aryl-alkyle avec à chaque fois 1 à 15 atomes de carbone, ces restes pouvant renfermer des atomes d'oxygène et/ou de soufre et/ou des groupes ester et/ou carbonyle et/ou carboxyle et/ou amide et/ou amino,
X = Hydrogène, halogène, hydroxy, alcoxy, acyloxy, alkyl-carbonyle, alcoxy-carbonyle ou NR"₂, avec R" = Hydrogène, alkyle, aryle ou alkyl-aryle,
a = 1, 2 ou 3,
et/ou des produits de précondensation dérivés de ces composés,
la poly condensation hydrolytique étant effectuée par addition d'eau ou d'humidité et le cas échéant en présence d'un solvant et/ou d'un catalyseur de condensation, et par rapport aux monomères, le rapport molaire de la somme des composés de formules I , II, III et IV et du composé de formule V étant choisi entre 1/0 et 1/20,
et le cas échéant
b) par addition
- d'un ou de plusieurs monomères et/ou oligomères co-polymérisables et/ou (poly)additionnables,
- et/ou un ou plusieurs catalyseurs de durcissement,
- et/ou un ou plusieurs additif(s) porogène(s).

2. Procédé selon la revendication 1,
**caractérisé en ce que**
l'on traite le liquide pour obtenir des membranes planes ou tubulaires.

3. Procédé selon la revendication 1 ou la revendication 2,
**caractérisé en ce que**
l'on finit la membrane sur un support.

4. Procédé selon au moins l'une des revendications 1 à 3,
**caractérisé en ce qu'**
on utilise un liquide qui renferme des poly condensats qui dérivent d'un ou de plusieurs composé(s) de formule I dans lesquels les indices a et/ou b et/ou c on la valeur 1.

5. Procédé selon au moins l'une des revendications 1 à 4,
**caractérisé en ce qu'**
on utilise un liquide qui renferme des poly condensats qui dérivent d'un ou de plusieurs composé(s) de formule II et/ou III dans lesquels le reste B renferme un ou plusieurs groupe(s) acrylate et/ou méthacrylate.

6. Procédé selon au moins l'une des revendications 1 à 5,
**caractérisé en ce qu'**
on utilise un liquide qui renferme des poly condensats qui dérivent d'un ou de plusieurs composé(s) de formule IV',
[(HS-R⁵)ₙR⁶-S-E-R⁵]ₐSiXₓR₄₋ₐ₋ₓ (IV')
dans laquelle les restes et indices ont la signification suivantes :
E = -CO-NH-, -CS-NH-, -CH₂-CH₂- ou -CH₂-CH(OH)-
R = Comme défini dans la revendication 1,
R⁵ = Alkylene, arylène, alkylenearylene ou arylènealkylène avec à chaque fois 1 à 15 atomes de carbone, ces restes pouvant être in- terrompus par des atomes d'oxygène et/ou de soufre et/ou par des groupes ester et/ou carbonyle et/ou carboxyle et/ou amide et/ou amino,
R⁶ = Alkylene, arylène, arylènealkylène ou arylènealkylène avec à chaque fois 1 à 15 atomes de carbone, ces restes pouvant être in- terrompus par des atomes d'oxygène et/ou de soufre et/ou par des groupes ester et/ou carbonyle et/ou carboxyle et/ou amide et/ ou amino,
X = comme défini dans la revendication 1
a = comme défini dans la revendication 1
n = 2, 3, 4 ou 5
x = comme défini dans la revendication 1

7. Procédé selon au moins l'une des revendications 1 à 6,
**caractérisé en ce que**
l'on utilise un liquide qui renferme un ou plusieurs composé(s) organique(s) ayant un ou plusieurs groupe(s) mercapto.

8. Procédé selon au moins l'une des revendications 1 à 7,
**caractérisé en ce que**
l' on utilise un liquide qui renferme un ou plusieurs composé(s) organique(s) ayant une ou plusieurs double(s) liaison(s) C=C.

9. Procédé selon la revendication 8,
**caractérisé en ce que**
l'on utilise un liquide qui renferme des poly condensats et/ou des oligo condensats qui ont une ou plusieurs double(s) liaison(s) C=C et qui dérivent de silanes à modification organique condensables hydrolytiquement.

10. Procédé selon au moins l'une des revendications 1 à 9,
**caractérisé en ce que**
l'on utilise un liquide qui renferme un ou plusieurs composés organiques avec un ou plusieurs groupe(s) amino substitué(s) ou non substitué(s).

11. Procédé selon la revendication 10,
**caractérisé en ce que**
l'on utilise un liquide qui renferme des poly condensats et/ou des oligo condensats qui comportent un ou plusieurs groupe(s) amino substitué(s) ou non substitué(s) et qui dérivent de silanes hydrolytiquement organique condensables hydrolytiquement.

12. Procédé selon au moins l'une des revendications 1 à 11,
**caractérisé en ce que**
l'on utilise un liquide qui renferme en tant qu'additif porogène un ou plusieurs sel(s) et/ou un ou plusieurs liquide(s) et/un ou plusieurs agent(s) soufflant(s) et/ou une ou plusieurs charge(s) poreuse(s).

13. Procédé selon la revendication 12,
**caractérisé en ce qu'**
après le durcissement on dissout l'additif porogène pour l'éliminer de la membrane et/ou on l'élimine par traitement thermique.

14. Procédé selon au moins l'une des revendications 1 à 13,
**caractérisé en ce que**
après le durcissement on élimine les composés organiques par craquage thermique.

15. Membrane semi-perméable pouvant être obtenue par un procédé de préparation conforme à au moins l'une des revendications 1 à 14.

16. Utilisation de la membrane semi-perméable selon la revendication 15 pour des procédés de séparation en particulier pour la séparation des gaz, pour l'osmose inverse, pour l'électro dialyse, pour la dialyse, pour la pervaporation, et pour la micro, ultra et hyper filtration.
